(19) Europäisches Patentamt / European Patent Office / Office européen des brevets

(11) **EP 3 398 307 B1**

(12) **FASCICULE DE BREVET EUROPEEN**

(45) Date de publication et mention de la délivrance du brevet:
**25.03.2020   Bulletin 2020/13**

(21) Numéro de dépôt: **16831621.4**

(22) Date de dépôt: **29.12.2016**

(51) Int Cl.:
*H04L 25/02* (2006.01)     *H04L 29/06* (2006.01)
*H04W 12/12* (2009.01)     *G01S 3/74* (2006.01)
*H04B 7/06* (2006.01)     *H04W 12/04* (2009.01)

(86) Numéro de dépôt international:
**PCT/EP2016/082867**

(87) Numéro de publication internationale:
**WO 2017/114915 (06.07.2017 Gazette 2017/27)**

(54) **PROCÉDÉ D'ASSOCIATION UNIVALENTE ET UNIVOQUE ENTRE ÉMETTEURS ET RÉCEPTEURS DE TRANSMISSION À PARTIR DU CANAL DE PROPAGATION**

VERFAHREN ZUR EINWERTIGEN UND EINDEUTIGEN ZUORDNUNG ZWISCHEN SENDERN UND EMPFÄNGERN DER ÜBERTRAGUNG AUF DER BASIS DES AUSBREITUNGSKANALS

METHOD OF UNIVALENT AND ONE-TO-ONE ASSOCIATION BETWEEN EMITTERS AND RECEIVERS OF TRANSMISSION ON THE BASIS OF THE PROPAGATION CHANNEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **29.12.2015   FR 1502713**

(43) Date de publication de la demande:
**07.11.2018   Bulletin 2018/45**

(73) Titulaires:
• **Thales**
  **92400 Courbevoie (FR)**
• **Teknologian Tutkimuskeskus VTT**
  **02044 VTT Espoo (FI)**

(72) Inventeurs:
• **DELAVEAU, François**
  **92622 Gennevilliers Cedex (FR)**
• **MOLIÈRE, Renaud**
  **92622 Gennevilliers Cedex (FR)**

• **KAMENI NGASSA, Christiane**
  **92622 Gennevilliers Cedex (FR)**
• **LEMÉNAGER, Claude**
  **92622 Gennevilliers Cedex (FR)**
• **KOTELBA, Adrian**
  **02044 VTT Espoo (FI)**
• **SUOMALAINEN, Jani**
  **02044 VTT Espoo (FI)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A1- 2 851 703     WO-A2-98/33340
FR-A1- 2 925 797     US-A1- 2003 217 289**

**Description**

L'invention concerne notamment un procédé permettant d'associer, de manière univalente et univoque, au moins un émetteur et un récepteur équipant deux utilisateurs, dans un réseau de communication en utilisant les propriétés du canal de propagation. Elle est utilisée, par exemple, dans des réseaux de radiocommunications, des réseaux de communications sans fil. Elle permet de sécuriser la transmission de données entre au moins deux utilisateurs.

Différentes méthodes existent qui permettent de sécuriser la transmission de données au sein d'un réseau de communication.

La plupart de ces méthodes utilisent des procédés cryptographiques avec distribution préalable de clés (parfois dénommées aussi codes) pour identifier des équipements électroniques et des utilisateurs, authentifier les liens de communication en cours d'établissement, associer les émetteurs et les récepteurs. L'inconvénient de ces méthodes réside dans la distribution et la gestion des clés qui peuvent s'avérer problématique en termes de distribution à grande échelle, tout comme en termes de garantie de non divulgation, ainsi que l'a montré l'actualité récente à propos des réseaux radio-cellulaires. Au contraire, la présente invention propose de réaliser des associations sécurisées entre émetteurs/récepteurs, sans utilisation de clés préalablement connues ou partagées.

L'invention concerne un procédé d'association univalente et univoque à partir du canal de propagation entre au moins un premier utilisateur et un deuxième utilisateur, sans utilisation de clé préalablement connue ou partagée. La sécurisation de l'association, puis des transmissions de données négociées ultérieurement sur la base de cette association reposent notamment sur l'utilisation de transmissions préalables de signaux d'interrogation et de signaux d'acquittement entre le premier utilisateur et le deuxième utilisateur, et sur des mesures et une quantification du canal de propagation par ces deux utilisateurs.

L'invention concerne un procédé d'association univalente et univoque, avant établissement d'un protocole de communication, à partir du canal de propagation (AU_CP) entre au moins un premier utilisateur A et un deuxième utilisateur B munis chacun de un ou de plusieurs émetteurs/récepteurs de transmission ($A_1... A_{NA}$) indexés par n et n' pour l'utilisateur A, ($B_1... B_{NB}$) indexés par m et m' pour l'utilisateur B, caractérisé en ce qu'il comporte au moins les étapes suivantes :

Phase d'initialisation :

   a) Emission par chaque émetteur $A_n$ de l'utilisateur A de signaux d'interrogation initiaux $S^{(0)}_{Int,n}$ pour l'émetteur d'indice n, constitués d'au moins une séquence aléatoire $PN^{(0)}_{Int,n}$ connue de l'utilisateur B, de facteur d'étalement $SF^{(0)}_{Int,n}$,

   b) Réception et désétalement par chaque récepteur $B_{m'}$ de l'utilisateur B de la séquence aléatoire $PN^{(0)}_{Int,n}$ de chacun des signaux d'interrogations initiaux $S^{(0)}_{Int,n}$, mesure par lesdits récepteurs $B_{m'}$ du canal de propagation $H^{(0)}_{AB,n,m'}$ entre $A_n$ et $B_{m'}$ sur la longueur de $L^{(0)}$ échantillons; estimation des coefficients $H^{(0)}_{AB,n,m'}(l_1)_{l_1=0,...,L-1}$ de la réponse impulsionnelle complexe correspondante ou des coefficients de la réponse en fréquence complexe correspondante,

   c) Quantification par l'utilisateur B des coefficients complexes $H^{(0)}_{AB,n,m'}(l_1)_{l_1=0,...,L-1}$ issus de ses mesures pour produire des valeurs numériques $Q^{(0)}_{AB,n,m'}(l_1)_{l_1=0,...,L-1}$,

   d) Emission par chaque émetteur $B_m$ de l'utilisateur B de signaux d'acquittement initiaux $S^{(0)}_{Acq,m}$ constitués d'au moins une séquence aléatoire notée $PN^{(0)}_{Acq,m}$ connue de l'utilisateur A, de facteur d'étalement $SF^{(0)}_{Acq,m}$,

   e) Réception et désétalement par chaque récepteur $A_{n'}$ de la séquence aléatoire $PN^{(0)}_{acq,m}$ de chacun des signaux d'acquittement initiaux $S^{(0)}_{Acq,m}$, mesure par lesdits récepteurs $A_{n'}$ du canal de propagation $H^{(0)}_{BA,m,n'}$ entre $B_m$ et $A_{n'}$ sur la longueur de $L^{(0)}$ échantillons; estimation des coefficients $H^{(0)}_{BA,m,n'}(l_1)_{l_1=0,...,L-1}$ de la réponse impulsionnelle complexe correspondante ou des coefficients de la réponse en fréquence complexe correspondante, les coefficients $H^{(0)}_{BA,m,n'}(l_1)_{l_1=0,...,L-1}$ étant identiques à ceux estimés par B à l'étape c), $H^{(0)}_{AB,n,m'}(l_1)_{l_1=0,...,L-1}$ lorsque le canal de propagation est réciproque et que les émetteurs récepteurs considérés pour A et B coïncident dans les deux sens d'interrogation et d'acquittement, avec n=n' et m=m',

f) Quantification par l'utilisateur A des coefficients complexes $H_{BA,m,n'}^{(0)}(l_1)_{l_1=0\,,...,L-1}$ issus de ses mesures pour produire des valeurs numériques $Q_{BA,m,n'}^{(0)}(l_1)_{l_1=0\,,...,L-1}$,

Phase Itération 1, première itération :

g) Emission par chacun des émetteurs $A_n$ de nouveaux signaux d'interrogation, $S^{(1)}_{Int,n}$, constitués d'au moins une nouvelle séquence aléatoire $PN^{(1)}_{Int,n}$ de facteur d'étalement $SF^{(1)}_{Int,n}$ choisie dans un ensemble prédéterminé connu de A et B ou construite selon un processus prédéterminé connu de A et B d'après les valeurs numériques $Q_{BA,m,n'}^{(0)}(l_1)_{l_1=0\,,...,L-1}$ déterminées par A à l'issue de l'étape f),

h) Réception et désétalement de la séquence $PN^{(1)}_{Int,n}$ du signal $S^{(1)}_{Int,n}$ par chaque récepteur $B_{m'}$, $B_{m'}$ qui reconstruit préalablement la séquence aléatoire $PN^{(1)}_{Int,n}$ choisie ou construite par $A_n$, selon le même processus que $A_n$, en exploitant les valeurs numériques $Q_{AB,n,m'}^{(0)}(l_1)_{l_1=0\,,...,L-1}$ déterminées par B lors de la quantification effectuée à l'étape c) des coefficients $H_{AB,n,m'}^{(0)}(l_1)_{l_1=0\,,...,L-1}$, valeurs numériques égales à celles produites par A à l'étape f) lorsque le canal de propagation est réciproque, que n=n' et que m=m'); lorsque m=m' et n=n', validation par B, grâce au désétalement de $PN^{(1)}_{Int,n}$ en réception par $B_m$, de l'égalité entre coefficients $Q_{AB,n,m}^{(0)}(l_1)_{l_1=0\,,...,L-1} = Q_{BA,m,n}^{(0)}(l_1)_{l_1=0\,,...,L-1}$ quantifiés lors de la phase d'initialisation, mesure actualisée par chaque récepteur $B_{m'}$ du canal de propagation $H^{(1)}_{AB,n,m'}$, entre $A_n$ et $B_{m'}$ sur la longueur de $L^{(1)}$ échantillons, estimation des coefficients $H_{AB,n,m'}^{(1)}(l_1)_{l_1=0\,,...,L-1}$ de la réponse impulsionnelle complexe correspondante ou des coefficients de la réponse en fréquence complexe correspondante,

i) Quantification par l'utilisateur B des coefficients $H_{AB,n,m'}^{(1)}(l_1)_{l_1=0\,,...,L-1}$ issus de ses mesures pour produire des valeurs numériques $Q_{AB,n,m'}^{(1)}(l_1)_{l_1=0\,,...,L-1}$

j) Emission par chaque émetteur $B_m$ de nouveaux signaux d'acquittement, notés $S^{(1)}_{Acq,m}$, constitués d'au moins une séquence aléatoire notée $PN^{(1)}_{Acq,m}$ de facteur d'étalement $SF^{(1)}_{Acq,m}$, choisie dans un ensemble prédéterminé connu de A et B ou construite selon un processus prédéterminé connu de A et B d'après les valeurs numériques $Q_{AB,n,m'}^{(0)}(l_1)_{l_1=0\,,...,L-1}$ déterminées par B à l'issue de l'étape c),

k) Réception et désétalement par chaque récepteur $A_{n'}$ des séquences aléatoires $PN^{(1)}_{acq,m}$ de chacun des signaux d'acquittement ($S^{(1)}_{Acq,m}$), $A_{n'}$ qui reconstitue préalablement la séquence $PN^{(1)}_{acq,m}$ choisie ou construite par $B_m$, selon le même processus que $B_m$, en exploitant les valeurs numériques $Q_{BA,m,n'}^{(O)}(l_1)_{l_1=0\,,...,L-1}$ que A a déterminées à l'étape f), valeurs numériques égales à celle produites par B à l'étape c), *soit* $Q_{AB,n,m'}^{(O)}(l_1)_{l_1=0\,,...,L-1}$ lorsque le canal de propagation est réciproque, que n=n' et que m=m'; toujours lorsque m=m' et n=n', validation par A, grâce au désétalement de $PN^{(1)}_{Acq,m}$, de l'égalité entre coefficients $Q_{BA,m,n}^{(0)}(l_1)_{l_1=0\,,...,L-1} = Q_{AB,n,m}^{(0)}(l_1)_{l_1=0\,,...,L-1}$ quantifiés lors de la phase d'initialisation, l'association univalente des émetteurs/récepteurs $A_n$ de l'utilisateur A et des émetteurs/récepteurs $B_m$ de l'utilisateur B devient alors effective grâce à la relation d'égalité entre coefficients quantifiés $Q_{AB,n,m}^{(0)}(l_1)_{l_1=0\,,...,L-1} = Q_{BA,m,n}^{(0)}(l_1)_{l_1=0\,,...,L-1}$ validée en $B_m$ à l'étape h) par la réception et le désétale-

ment de $PN^{(1)}_{Int,n}$ et validée en $A_n$ à cette étape k) par la réception et le désétalement de $PN^{(1)}_{acq,m}$; mesure par chaque récepteur $A_{n'}$ du canal de propagation $H^{(1)}_{BA,m,n'}$ entre $B_m$ et $A_{n'}$ sur la longueur de $L^{(1)}$ échantillons; estimation des coefficients $H^{(1)}_{BA,m,n'}(l_1)_{l_1=0,...,L-1}$ de la réponse impulsionnelle complexe (ou des coefficients de la réponse en fréquence complexe) correspondante (57), les coefficients $H^{(1)}_{BA,m,n'}(l_1)_{l_1=0,...,L-1}$ étant identiques à ceux estimés par B à l'étape h), $H^{(1)}_{AB,n,m'}(l_1)_{l_1=0,...,L-1}$, lorsque le canal de propagation est réciproque et que les émetteurs récepteurs considérés pour A et B coïncident dans les deux sens d'interrogation et d'acquittement, n=n' et m=m',

l) Quantification par l'utilisateur A des coefficients complexes $H^{(1)}_{BA,m,n'}(l_1)_{l_1=0,...,L-1}$ issus de ses mesures pour produire des coefficients numériques $Q^{(1)}_{BA,m,n'}(l_1)_{l_1=0,...,L-1}$.

Le procédé peut comporter au moins une deuxième itération des étapes de la première itération avec l'émission de signaux d'interrogation $S^{(2)}_{Int,n}$ contenant la séquence $PN^{(2)}_{Int,n}$ et l'émission de signaux d'acquittement $S^{(2)}_{Acq,m}$ contenant la séquence $PN^{(2)}_{Acq,m}$, élaborés d'après les résultats de mesure $H^{(1)}_{AB,n,m'}(l_1)_{l_1=0,...,L-1}$ et $H^{(1)}_{BA,m,n'}(l_1)_{l_1=0,...,L-1}$ et d'après les résultats de quantification $Q^{(1)}_{AB,n,m'}(l_1)_{l_1=0,...,L-1}$ et $Q^{(1)}_{BA,m,n'}(l_1)_{l_1=0,...,L-1}$ produits à l'itération 1, la quantification de nouveaux coefficients $Q^{(2)}_{AB,n,m'}(l_1)_{l_1=0,...,L-1}$ et $Q^{(2)}_{BA,m,n'}(l_1)_{l_1=0,...,L-1}$, et l'association univalente et univoque des émetteurs/récepteurs $A_n$ de l'utilisateur A et des émetteurs/récepteurs $B_m$ de l'utilisateur B par la relation entre coefficients quantifiés lors de l'itération 1 $Q^{(1)}_{AB,n,m}(l_1)_{l_1=0,...,L-1} = Q^{(1)}_{BA,m,n}(l_1)_{l_1=0,...,L-1}$, association validée par la réception et le désétalement des séquences d'interrogation $PN^{(2)}_{Int,n}$ et d'acquittement $PN^{(2)}_{Acq,m}$ émis par $A_n$ et $B_m$ lors de la deuxième itération.

Le procédé comporte, par exemple, à chaque nouvelle itération k+1 avec k supérieur ou égal à 1, l'émission de signaux d'interrogation $S^{(k+1)}_{Int,n}$ contenant la séquence $PN^{(k+1)}_{Int,n}$ et de signaux d'acquittement $S^{(k+1)}_{Acq,m}$ contenant la séquence $PN^{(k+1)}_{Acq,m}$ et construits d'après les résultats de mesure de l'itération k $H^{(k)}_{AB,n,m'}(l_1)_{l_1=0,...,L-1}$ et $H^{(k)}_{BA,m,n'}(l_1)_{l_1=0,...,L-1}$ et d'après les résultats de quantification de l'itération k $Q^{(k)}_{AB,n,m'}(l_1)_{l_1=0,...,L-1}$ et $Q^{(k)}_{BA,m,n'}(l_1)_{l_1=0,...,L-1}$, et l'association univalente et univoque des émetteurs/récepteurs $A_n$ de l'utilisateur A et des émetteurs/récepteurs $B_m$ de l'utilisateur B, en utilisant la relation $Q^{(k)}_{AB,n,m}(l_1)_{l_1=0,...,L-1} = Q^{(k)}_{BA,m,n}(l_1)_{l_1=0,...,L-1}$ entre coefficients quantifiés lors de l'itération k, association validée par la réception et le désétalement par $B_m$ et $A_n$ des signaux d'interrogation et d'acquittement émis par $A_n$ et $B_m$ lors de la (k+1)ième itération.

Selon une variante de réalisation, le procédé pour les étapes de quantification c) et f) lors de l'initiation, aux étapes i) et l) lors de l'itération 1 et aux étapes similaires lors des itérations suivantes, utilise une fonction de sélection et de codage correcteur des coefficients de canaux $H^{(k)}_{AB,n,m}(l_1)_{l_1=0,...,L-1}$ et $H^{(k)}_{BA,m,n}(l_1)_{l_1=0,...,L-1}$, la fonction étant adaptée à retenir uniquement des coefficients dont l'estimation est la plus fiable, par application d'un critère de seuillage sur la qualité de l'estimation des coefficients précités et d'une correction d'erreur sur les sorties de quantification $Q^{(k)}_{AB,n,m}(l_1)_{l_1=0,...,L-1}$ et $Q^{(k)}_{BA,m,n}(l_1)_{l_1=0,...,L-1}$, ce critère de seuillage et cette correction étant prédéfinis entre les utilisateurs A et B.

Un récepteur $B_m$ utilise, à l'étape d) précitée, un processus de construction spécifique des signaux d'acquitte-

ment initiaux modifiés S'$^{(0)}$$_{Acq,m}$ faisant dépendre ceux-ci des toutes premières mesures de canaux $H^{(0)}_{AB,n,m'}$ et des coefficients quantifiés correspondants $Q^{(0)}_{AB,n,m'}(l_1)_{l_1=0,...,L-1}$, tout en ménageant la possibilité pour les récepteurs $A_{n'}$ de l'utilisateur A de reconstruire et de désétaler les signaux S'$^{(0)}$$_{Acq,m}$, lesdits signaux d'acquittement initiaux modifiés comportant au moins deux séquences PN, notées PN$^{(0)}$$_{Acq,m}$ et PN'$^{(0)}$$_{Acq,m}$, émises successivement ou simultanément, la première des séquences, PN$^{(0)}$$_{Acq,m}$, étant connue de $A_{n'}$ comme à l'étape d), la seconde des séquences, PN'$^{(0)}$$_{Acq,m}$, étant choisie dans un ensemble prédéterminé connu de B et de A ou construite selon un processus prédéterminé connu de B et de A d'après les valeurs numériques $Q^{(0)}_{AB,n,m}(l_1)_{l_1=0,...,L-1}$ tout juste quantifiées par B à l'issue de l'étape c); et $A_{n'}$ applique aux étapes e) et f) précitées non seulement une réception et un désétalement de la séquence PN$^{(0)}$$_{Acq,m}$ mais aussi une reconstruction de la séquence PN'$^{(0)}$$_{Acq,m}$ d'après les estimations de canal $H^{(0)}_{BA,m,n'}(l_1)_{l_1=0,...,L-1}$ et les quantifications $Q^{(0)}_{BA,m,n'}(l_1)_{l_1=0,...,L-1}$ qu'il conduit grâce au désétalement de PN$^{(0)}$$_{Acq,m}$ aux étapes e) et f) suivi d'un désétalement de la séquence PN'$^{(0)}$$_{Acq,m}$, pour produire une validation immédiate de l'égalité entre les coefficients $Q^{(0)}_{AB,n,m'}(l_1)_{l_1=0,...,L-1}$ et $Q^{(0)}_{BA,m,n'}(l_1)_{l_1=0,...,L-1}$ quantifiés en phase d'initialisation.

Selon une variante de mise en œuvre, le procédé comporte à chaque nouvelle itération k+1 avec k supérieur ou égal à 0, l'émission de signaux d'acquittement S$^{(k+1)}$$_{Acq,m}$ contenant au moins deux séquences PN$^{(k+1)}$$_{Acq,m}$ et PN'$^{(k+1)}$$_{Acq,m}$ émises séquentiellement ou simultanément, PN$^{(k+1)}$$_{Acq,m}$ étant choisie dans un ensemble prédéterminé ou construite adaptativement d'après les résultats de quantification $Q^{(k)}_{AB,n,m'}(l_1)_{l_1=0,...,L-1}$ à l'itération n°k, et PN'$^{(k+1)}$$_{Acq,m}$ est choisie dans un ensemble prédéterminé ou construite adaptativement d'après les résultats de quantification courant $Q^{(k+1)}_{AB,n,m'}(l_1)_{l_1=0,...,L-1}$ à l'itération n° k+1; $A_{n'}$ applique non seulement une réception et un désétalement de la séquence PN$^{(k)}$$_{Acq,m}$ reconstruite d'après ses coefficients quantifiés $Q^{(k)}_{BA,m,n'}(l_1)_{l_1=0,...,L-1}$, mais aussi une reconstruction de la séquence PN'$^{(k+1)}$$_{Acq,m}$ d'après les estimations de canal $H^{(k+1)}_{BA,m,n'}(l_1)_{l_1=0,...,L-1}$ et les quantifications $Q^{(k+1)}_{BA,m,n'}(l_1)_{l_1=0,...,L-1}$ qu'il conduit grâce au désétalement de PN$^{(k+1)}$$_{Acq,m}$, suivi d'un désétalement de la séquence PN'$^{(k+1)}$$_{Acq,m}$ pour valider immédiatement l'égalité entre les coefficients $Q^{(k+1)}_{AB,n,m'}(l_1)_{l_1=0,...,L-1}$ et $Q^{(k+1)}_{BA,m,n'}(l_1)_{l_1=0,...,L-1}$ quantifiés à l'itération k+1.

Les émetteurs de A peuvent utiliser des signaux d'interrogation initiaux choisis aléatoirement dans un ensemble de signaux connus de B, les récepteurs de B n'acquittent que l'un des signaux d'interrogation initiaux reçus, soit prédéterminé par les caractéristiques des récepteurs de B, soit choisi aléatoirement par les récepteurs de B, après synchronisation désétalement et mesure desdits signaux d'interrogation initiaux.

Les émetteurs de B utilisent, par exemple, des signaux d'acquittement initiaux choisis aléatoirement dans un ensemble de signaux connus de A, les récepteurs de A ne traitent en réception que certains des signaux d'acquittement initiaux reçus, soit prédéterminé par les caractéristiques des récepteurs de A, soit choisis aléatoirement par les récepteurs de A, après synchronisation, désétalement et mesure desdits signaux d'acquittement initiaux.

Les émetteurs de A peuvent appliquer une gigue aléatoire en temps aux signaux d'interrogation et les émetteurs de B appliquer une gigue aléatoire en temps aux signaux d'acquittement.

Selon une variante de réalisation, le procédé utilise des signaux d'interrogation et d'acquittement $SI_A$ et $SA_B$, émis conjointement à des signaux balises de l'un ou l'autre utilisateur A ou B, $AI_A$ et $AI_B$, c'est-à-dire de manière auto-interférée, lesdits signaux d'interrogation et d'acquittement étant émis, reçus et traités à chaque itération k grâce à des paramétrages adaptés de leurs puissances d'émission par A et B, $SI^{(k)}_A$ et $SA^{(k)}_B$, de leurs niveaux de réception en B et en A, des interférences induites par la balise de A reçue en B et par la balise de B reçue en A, $AI^{(k)}_{A->B}$ et $AI^{(k)}_{B->A}$, des niveaux de réception en B et en A des auto-interférences issues de B et de A, $AI^{(k)}_{A->A}$ et $AI^{(k)}_{B->B}$, des dispositifs d'auto-réjection de ces auto-interférences à la réception en A et B, $RAI_{A->A}$ et $RAI_{B->B}$, des facteurs d'étalement à l'émission en A et B, $SF^{(k)}_{Int,n}$ et $SF^{(k)}_{Acq,m}$, selon les égalités et inégalités suivantes exprimées en décibels :

- aux réceptions de l'utilisateur B :

$$AI^{(k)}_{A->B} = AI^{(k)}_A - L^{(k)}_{A->B}$$

$$SI^{(k)}_{A->B} = SI^{(k)}_A - L^{(k)}_{A->B}$$

où $L^{(k)}_{A->B}$ représente les pertes totales de propagation de A vers B,

$$SF^{(k)}_{Int,n} \geq 10.\log_{10}[10^{\wedge}(SI^{(k)}_{A->B}/10)] -$$
$$10.\log_{10}[10^{\wedge}((AI_{B->B}-RAI_{B->B})/10) + 10^{\wedge}(AI^{(k)}_{A->B}/10)]$$
$$+ \eta_B,$$

- aux réceptions de l'utilisateur A :

$$AI^{(k)}_{B->A} = AI^{(k)}_B - L^{(k)}_{B->A}$$

$$SI^{(k)}_{B->A} = SI^{(k)}_A - L^{(k)}_{B->A}$$

où $L^{(k)}_{B->A}$ représente les pertes totales de propagation de B vers A

$$SF^{(k)}_{Int,n} \geq 10.\log_{10}[10^{\wedge}(SI^{(k)}_{B->A}/10)] -$$
$$10.\log_{10}[10^{\wedge}((AI_{A->A}-RAI_{A->A})/10) + 10^{\wedge}(AI^{(k)}_{B->A}/10)]$$
$$+ \eta_A,$$

les marges $\eta_B$ et $\eta_A$ étant liées aux performances des équipements radio utilisés par les récepteurs de A et de B.

Selon une variante de réalisation, le procédé met en œuvre des signaux d'interrogation et d'acquittement émis conjointement aux messages d'échanges de données entre les utilisateurs, c'est-à-dire de manière auto-interférée, lesdits signaux d'interrogation et d'acquittement étant émis, reçus et traités à chaque itération k grâce à des paramétrages adaptés de leurs puissances d'émission par A et B, de leurs niveaux de réception en B et en A, des interférences induites par les messages de A reçus en B et par les messages de B reçus en A, des niveaux de réception en B et en A, des auto-interférences issues de B et de A, des dispositifs d'auto-réjection de ces auto-interférences à la réception en A et B, des facteurs d'étalement à l'émission en A et B), selon des égalités et inégalités aux expressions similaires à celles précédemment citées.

Le mode de communication mis en œuvre entre utilisateurs est, par exemple, un mode Duplex temporel employant une même fréquence porteuse pour les échanges en émission et en réception dans les deux sens de transmission, et bénéficie directement de la réciprocité du canal de propagation sur la fréquence unique employée pour les interrogations et les acquittements.

Le procédé est, par exemple, dupliqué sur l'ensemble des fréquences porteuses employées par des utilisateurs à mode Duplex fréquentiel employant des fréquences porteuses différentes pour leurs échanges en émission et en réception selon le sens de transmission, afin de bénéficier de la réciprocité du canal de propagation sur chacune des fréquences employées pour les interrogations et les acquittements.

Les étapes du procédé peuvent être réitérées pour chaque nouvelle transmission de phonie ou de données, ou encore pour chaque nouveau message d'une transmission de phonie ou de données en cours.

Les émetteurs/récepteurs utilisés sont, par exemple, adaptés à des radiocommunications. Les émetteurs/récepteurs de l'utilisateur A peuvent être reliés aux éléments d'antennes d'un réseau utilisé par A et les émetteurs/récepteurs de l'utilisateur B reliés aux éléments d'antennes d'un réseau utilisé par B dans le cadre de protocoles dits de type MISO, SIMO, MIMO ou « massive MIMO » connus de l'homme du métier.

Les émetteurs/récepteurs de l'utilisateur A sont, par exemple, des stations de base ou des nœuds d'un réseau de radiocommunication et les émetteurs/récepteurs de l'utilisateur B sont des terminaux ou d'autres nœuds dudit réseau de radiocommunication.

Les émetteurs et récepteurs sont, par exemple, adaptés à des transmissions acoustiques ou à des transmissions optiques.

D'autres caractéristiques et avantages de la présente invention apparaîtront mieux à la lecture de la description qui suit d'exemples donnés à titre illustratif et nullement limitatif, annexée des figures qui représentent :

- Figure 1, un schéma général d'échanges d'information entre deux utilisateurs A (Alice) et B (Bob) en présence d'un tiers étranger E (Eve) non autorisé à connaître le contenu des données échangées entre A et B,
- Figure 2, une illustration des effets d'un canal de propagation dispersif sur la transmission des signaux depuis un émetteur A vers un récepteur autorisé B et vers récepteur non autorisé E, et
- Figure 3, un schéma des étapes mises en œuvre par le procédé selon l'invention.

Afin de mieux faire comprendre le procédé selon l'invention, l'exemple est donné dans le cas d'un échange entre un premier utilisateur émetteur/récepteur A (Alice) et un deuxième utilisateur émetteur/récepteur B (Bob), en présence d'un récepteur tiers E (Eve) non autorisé et susceptible d'intercepter les communications pour accéder au contenu des données échangées entre A et B.

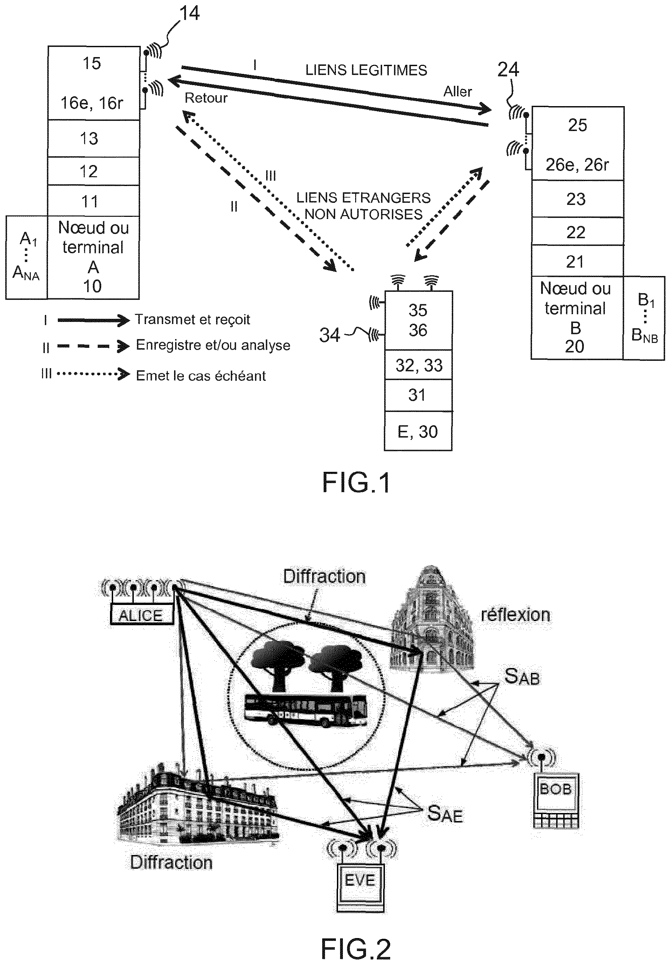

La figure 1 illustre un scénario de communication entre un premier utilisateur A, 10 et un deuxième utilisateur B, 20 en présence d'un récepteur tiers non autorisé E, 30.

L'utilisateur A est, par exemple, un nœud ou un terminal d'un réseau de communication comportant une unité de calcul 11, un module de codage/décodage 12, un module de démodulation 13, un module composé d'antennes 14, un ensemble de filtres 15, des moyens d'émission et réception radio 16. Ces éléments sont connus de l'homme du métier et ne seront pas détaillés. L'objet de l'invention va consister notamment à associer de manière univoque et univalente A et B, comme il va être explicité ci-après. Alice ou A comporte par exemple NA émetteurs/récepteurs An notés $A_1... A_{NA}$ pour l'utilisateur A.

De même, l'utilisateur B, 20, comporte, par exemple, une unité de calcul 21, un module de codage/décodage 22, un module de démodulation 23, un module composé d'antennes 24, de filtres 25, de moyens d'émission et réception radio 26. Bob comporte, par exemple, NB émetteurs/récepteurs notés $B_1... B_{NB}$.

Le récepteur tiers non autorisé E, 30, comporte une unité de calcul 31, un enregistreur de données 32 et un module d'analyse 33, un bloc d'antennes 34, de filtres 35 et de moyens de réception radio 36 et éventuellement des émetteurs et des récepteurs.

La figure 2 schématise un exemple de canaux de propagation existants dans un système de communication. Dans des environnements extérieurs ou intérieurs, les formes d'ondes transmises de l'émetteur A vers le récepteur B et vers le tiers E suivent des parcours à trajets multiples. Les signaux peuvent être réfléchis par des obstacles avec différents angles de réflexion. Une partie des signaux $S_{AB}$ peut être reçue par Bob, alors qu'une autre partie après diffraction $S_{AE}$, sera reçue sur le tiers non autorisé E. Du fait de la complexité dans la propagation des ondes et des diffractions peu prévisibles dans le canal de communication, le tiers E est a priori incapable de prédire ou de reconstituer les mesures du canal de propagation entre un émetteur de A et un récepteur de B.

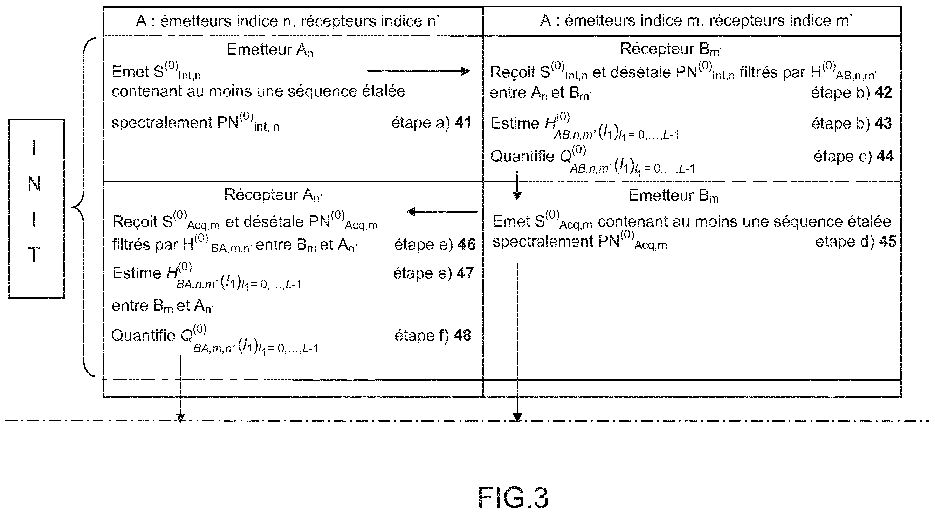

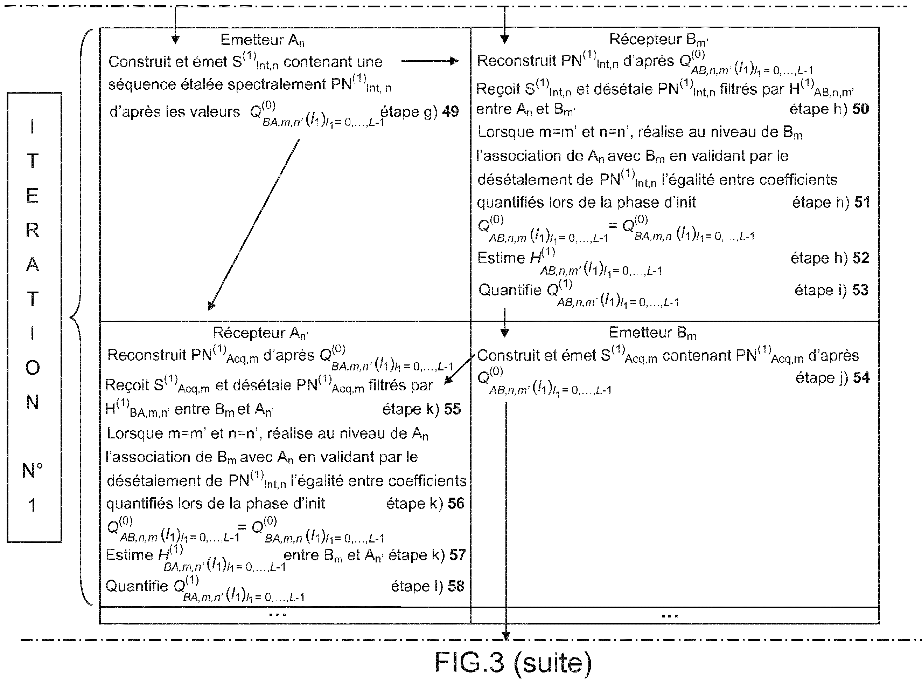

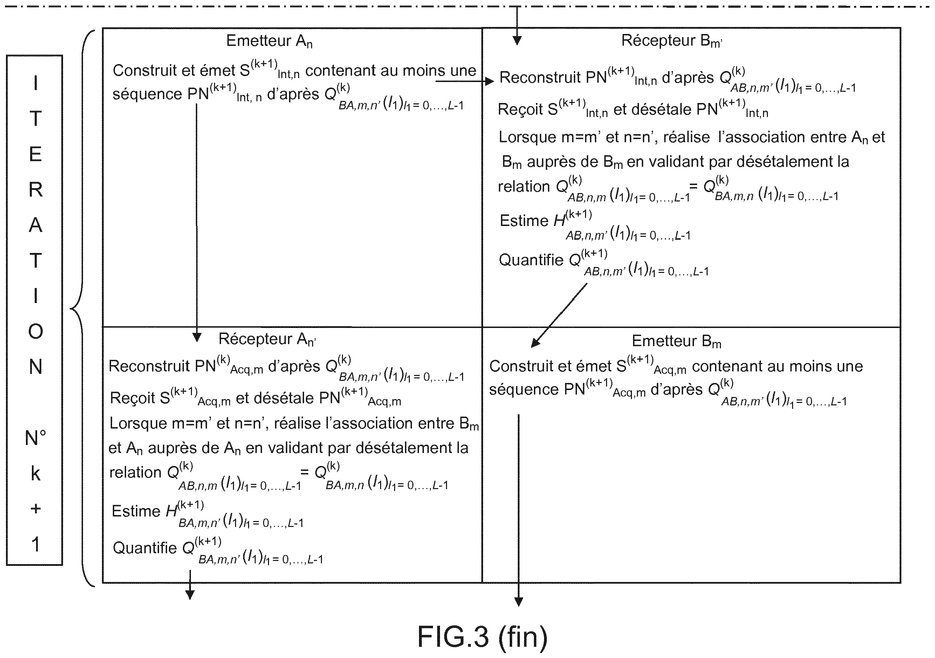

Le procédé selon l'invention illustré à la figure 3 est un procédé d'association univalente et univoque à partir du canal de propagation (AU_CP) entre Alice et Bob. L'association entre Alice et Bob est réalisée sans clé préalablement connue ou partagée, et elle est sécurisée vis-à-vis de tout tiers non autorisé E, avant même l'établissement du protocole de transmission entre les utilisateurs A et B, à l'aide de transmissions préalables de signaux d'interrogation et de signaux d'acquittement, à l'aide de mesures des canaux de propagation entre les émetteurs récepteurs de A et ceux de B grâce à ces signaux d'interrogation et d'acquittement, et enfin à l'aide d'une quantification de ces canaux de propagation. Cette association est destinée notamment à faciliter ultérieurement l'établissement d'une transmission, protégée vis-à-vis de E, entre les utilisateurs A et B ainsi que l'identification de A par B et de B par A, le contrôle de confidentialité et le contrôle d'intégrité des messages échangés par A et B.

Un exemple des étapes du procédé selon l'invention va être détaillé ci-après.

Une première phase permet une initialisation du procédé.

Etape a) : chaque émetteur $A_n$ de l'utilisateur A (avec n variant de 1 à NA) émet des signaux d'interrogation initiaux, $S^{(0)}_{Int,n}$ pour l'émetteur d'indice n, 41, constitués d'au moins une séquence aléatoire $PN^{(0)}_{Int,n}$ de période $P^{(0)}_{Int,n}$ et de facteur d'étalement $SF^{(0)}_{Int,n}$ connue de l'utilisateur B ;

Etape b) : chaque récepteur $B_{m'}$ de l'utilisateur B, (avec m' variant de 1 à NB) va réceptionner et échantillonner à une période $T_e$ respectant le critère de Nyquist, les signaux d'interrogations initiaux $S^{(0)}_{Int,n}$, puis, après synchronisation, chaque récepteur $B_{m'}$ va desétaler la séquence $PN^{(0)}_{Int,n}$ correspondante, 42, puis chaque récepteur, $B_{m'}$ va mesurer, 43, les paramètres du canal de propagation $H^{(0)}_{AB,n,m'}$ entre $A_n$ et $B_{m'}$ sur la longueur de $L^{(0)}$ échantillons,

puis estimer, 43, des coefficients $H^{(0)}_{AB,n,m'}(l_1)_{l_1=0,...,L-1}$ de la réponse impulsionnelle complexe correspondante ou des coefficients de la réponse en fréquence complexe correspondante ;

Etape c) : l'utilisateur B va ensuite quantifier les coefficients complexes issus des coefficients de canal $H^{(0)}_{AB,n,m'}(l_1)_{l_1=0,...,L-1}$. La quantification, 44, est, par exemple, réalisée en effectuant un maillage géométrique du plan complexe, dans lequel ces coefficients prennent une valeur et une numérotation selon la maille à laquelle ils appartiennent, pour produire des valeurs numériques $Q^{(0)}_{AB,n,m'}(l_1)_{l_1=0,...,L-1}$, 44 ;

Etape d) : chaque émetteur $B_m$ de l'utilisateur B émet un signal d'acquittement $S^{(0)}_{Acq,m}$, 45, constitué d'au moins une séquence aléatoire notée $PN^{(0)}_{Acq,m}$, de période $P^{(0)}_{Acq,m}$ et de facteur d'étalement $SF^{(0)}_{Acq,m}$ connue de l'utilisateur A ;

Etape e) : chaque récepteur $A_{n'}$ de l'utilisateur A va ensuite réceptionner, échantillonner à un période $T_e$ respectant le critère de Nyquist les signaux d'acquittement initiaux ($S^{(0)}_{Acq,m}$), 46, puis après synchronisation, désétaler les séquences aléatoires $PN^{(0)}_{acq,m}$ correspondantes. Chacun des récepteurs $A_{n'}$ va ensuite mesurer des paramètres du canal de propagation $H^{(0)}_{BA,m,n'}$ entre $B_m$ et $A_{n'}$ sur la longueur de $L^{(0)}$ échantillons, 47, puis estimer des coefficients $H^{(0)}_{BA,m,n'}(l_1)_{l_1=0,...,L-1}$ de la réponse impulsionnelle complexe correspondante ou des coefficients de la réponse en fréquence complexe correspondante, 47, les coefficients $H^{(0)}_{BA,m,n'}(l_1)_{l_1=0,...,L-1}$ étant identiques à ceux estimés par B $H^{(0)}_{AB,n,m'}(l_1)_{l_1=0,...,L-1}$, lorsque le canal de propagation est réciproque et que les émetteurs récepteurs considérés pour A et B coïncident dans les deux sens d'interrogation et d'acquittement, c'est-à-dire lorsque n=n' et m=m' ;

Etape f) : l'utilisateur A va ensuite quantifier des coefficients complexes $H^{(0)}_{BA,m,n'}(l_1)_{l_1=0,...,L-1}$, issus des mesures de ses récepteurs, ladite quantification, 48, de même nature que celle décrite pour l'utilisateur B à l'étape c), consistant, par exemple, en un maillage géométrique du plan complexe dans lequel ces coefficients prennent leur valeurs et en leur numérotation selon la maille à laquelle ils appartiennent, pour produire des valeurs numériques $Q^{(0)}_{BA,m,n'}(l_1)_{l_1=0,...,L-1}$, 48. A la fin de l'étape d'initialisation, on dispose des valeurs quantifiées des coefficients de canal, $Q^{(0)}_{AB,n,m'}(l_1)_{l_1=0,...,L-1}$ dans le sens A vers B pour toute paire d'indice (n,m') et $Q^{(0)}_{BA,m,n'}(l_1)_{l_1=0,...,L-1}$ dans le sens B vers A pour toute paire d'indice (m,n').

Après initialisation du système, le procédé va exécuter plusieurs étapes permettant d'associer ou non les émetteurs/récepteurs $A_n$ de l'utilisateur A et les émetteurs/récepteurs $B_m$ de l'utilisateur B.

Première itération - Itération 1.

Etape g): chaque émetteur $A_n$ de l'utilisateur A émet de nouveaux signaux d'interrogation, notés $S^{(1)}_{Int,n}$, 49. Ces signaux d'interrogation sont constitués d'au moins une nouvelle séquence aléatoire $PN^{(1)}_{Int,n}$, de période $P^{(1)}_{Int,n}$ et de facteur d'étalement $SF^{(1)}_{Int,n}$. La séquence est choisie, par exemple, dans un ensemble prédéterminé connu de A et B ou construite selon un processus prédéterminé connu de A et B d'après les valeurs numériques $Q^{(0)}_{BA,m,n'}(l_1)_{l_1=0,...,L-1}$, 48, déterminées par A à l'issue de l'étape d'initialisation, par exemple, en utilisant ces valeurs numériques comme index du nouveau signal d'interrogation choisi dans un ensemble prédéterminé connu de A et B ou comme graine d'un algorithme de génération prédéterminé, ou encore comme paramètre de tout autre processus (prédéterminé et connu de A et B) de construction de séquences aléatoires d'interrogation ;

Etape h) : chaque récepteur $B_{m'}$ de l'utilisateur B reçoit les signaux $S^{(1)}_{Int,n}$ émis par les émetteurs $A_n$ de l'utilisateur A, les échantillonne à une période d'échantillonnage $T_e$ respectant le critère de Nyquist, puis, après synchronisation, chaque récepteur $B_{m'}$ désétale les séquences $PN^{(1)}_{Int,n}$ correspondantes, 50, en reconstruisant au préalable la séquence aléatoire $PN^{(1)}_{Int,n}$ choisie ou construite par $A_n$, 50, grâce aux valeurs numériques

$Q^{(0)}_{AB,n,m'}(l_1)_{l_1=0\,,...,L-1}$ quantifiées à l'étape d'initialisation par B, 44, valeurs numériques égales à celle produites par A à l'étape f), 48, lorsque le canal de propagation est réciproque, que n=n' et m=m'. Lorsque le canal de propagation est réciproque, que n=n' ($A_n$ émetteur récepteur) et m=m' ($B_m$ émetteur récepteur), le succès du dé- sétalement par $B_m$ de $PN^{(1)}_{Int,n}$ réalise au niveau de $B_m$ l'association de $A_n$ avec $B_m$, en validant l'égalité, 51, entre coefficients quantifiés en phase d'initialisation dans les sens $A_n$ vers $B_m$, 44, et $B_m$ vers $A_n$, 48. Ensuite, chaque récepteur $B_{m'}$ actualise les valeurs des paramètres du canal de propagation, notées $H^{(1)}_{AB,n,m'}$, entre $A_n$ et $B_{m'}$ sur la longueur de $L^{(1)}$ échantillons, puis estime des coefficients $H^{(1)}_{AB,n,m'}(l_1)_{l_1=0\,,...,L-1}$ de la réponse impulsionnelle complexe correspondante ou des coefficients de la réponse en fréquence complexe correspondante, 52 ;

Etape i) : L'utilisateur B quantifie des coefficients $H^{(1)}_{AB,n,m'}(l_1)_{l_1=0\,,...,L-1}$ issus des mesures de ses récepteurs, ladite quantification, similaire à celle décrite à l'étape c), génère des coefficients numériques

$Q^{(1)}_{AB,n,m'}(l_1)_{l_1=0\,,...,L-1}$, 53 ; Etape j : chaque émetteur $B_m$ va émettre de nouveaux signaux d'acquittement vers l'utilisateur A, notés $S^{(1)}_{Acq,m}$, 54, constitués d'au moins une séquence aléatoire notée $PN^{(1)}_{Acq,m}$ de période $P^{(1)}_{Acq,m}$ et de facteur d'étalement $SF^{(1)}_{Acq,m}$, choisis dans un ensemble prédéterminé connu de A et B ou construite selon un processus prédéterminé connu de A et B d'après les valeurs numériques $Q^{(0)}_{AB,n,m'}(l_1)_{l_1=0\,,...,L-1}$ déterminées par B à l'issue de l'étape c), 44, par exemple en utilisant ces valeurs numériques comme index du nouveau signal d'acquittement choisi dans un ensemble prédéterminé connu de A et B ou comme graine d'un algorithme de génération prédéterminé, ou comme paramètre de tout autre processus (prédéterminé et connu de A et B) de construction de séquences aléatoires d'acquittement entre A et B, 54 ;

Etape k) : chaque récepteur $A_{n'}$ de l'utilisateur A reçoit les signaux ($S^{(1)}_{Acq,m}$) émis par les émetteurs $B_m$ l'utilisateur B, les échantillonne avec une période $T_e$ respectant le critère de Nyquist, puis, après synchronisation chaque récepteur $A_{n'}$ désétale les séquences aléatoires $PN^{(1)}_{acq,m}$ correspondantes, 55, en reconstruisant au préalable la

séquence $PN^{(1)}_{acq,m}$ choisie ou construite par $B_m$, 54, grâce aux valeurs numériques $Q^{(O)}_{BA,m,n}(l_1)_{l_1=0\,,...,L-1}$ quantifiées à l'étape d'initialisation par A étape f) 48, valeurs numériques égales à celle produites par B à l'étape

c), soit $Q^{(O)}_{AB,n,m'}(l_1)_{l_1=0\,,...,L-1}$ lorsque le canal de propagation est réciproque, que n=n' et m=m'. Lorsque le canal de propagation est réciproque, que n=n' ($A_n$ émetteur récepteur) et m=m' ($B_m$ émetteur récepteur) le succès du désétalement par $A_n$ de $PN^{(1)}_{Acq,m}$ réalise au niveau de $A_n$ l'association de $B_m$ avec $A_n$, en validant l'égalité, 56, entre coefficients quantifiés dans les sens B vers A, 48, et A vers B, 44, lors de la phase d'initialisation. Ceci réalise l'association univalente pour les utilisateurs A et B, des émetteurs/récepteurs $A_n$ de l'utilisateur A et des émet- teurs/récepteurs $B_m$ de l'utilisateur B par les relations entre coefficients quantifiés lors de la phase d'initialisation

$$Q^{(0)}_{AB,n,m}(l_1)_{l_1=0\,,...,L-1} = Q^{(0)}_{BA,m,n}(l_1)_{l_1=0\,,...,L-1}\ \text{51 et 56;}$$

Ensuite, chaque récepteur $A_{n'}$ de l'utilisateur A actualise les valeurs des paramètres du canal de propagation $H^{(1)}_{BA,m,n'}$ entre $B_m$ et $A_{n'}$ sur la longueur de $L^{(1)}$ échantillons ; puis estime, 57, des coefficients

$H^{(1)}_{BA,m,n'}(l_1)_{l_1=0\,,...,L-1}$ de la réponse impulsionnelle complexe correspondante ou des coefficients de la réponse en fréquence complexe correspondante, les coefficients $H^{(1)}_{BA,m,n'}(l_1)_{l_1=0\,,...,L-1}$ étant identiques à ceux estimés par B à l'étape h), 52, $H^{(1)}_{AB,n,m'}(l_1)_{l_1=0\,,...,L-1}$ lorsque le canal de propagation est réciproque et que les émetteurs récepteurs considérés pour A et B coïncident dans les deux sens d'interrogation et d'acquittement, c'est à dire lorsque n=n' et m=m' ;

Etape I : Quantification par l'utilisateur A des coefficients complexes, $H^{(1)}_{BA,m,n'}(l_1)_{l_1=0\,,...,L-1}$ issus des mesures de ses récepteurs, ladite quantification, similaire à celle décrite à l'étape f) génère des coefficients numériques

$Q^{(1)}_{BA,m,n'}(l_1)_{l_1=0\,,...,L-1}$, 58.

Lorsqu'à la première itération pour un couple d'émetteurs/récepteurs $A_n$ et $B_m$ (n=n', m=m'), $B_m$ parvient à désétaler le signal d'interrogation $PN^{(1)}_{Int,n}$ provenant de $A_n$ et $A_n$ parvient à désétaler le signal d'acquittement $PN^{(1)}_{Acq,m}$, provenant de $B_m$, alors il y a association de l'émetteur/récepteur $A_n$ et de de l'émetteur/récepteur $B_m$, sur la base de l'égalité des coefficients de quantification obtenus lors de l'étape d'initialisation, et certification de cette association par le succès du désétalement.

De manière générale, si le désétalement de $A_n$ sur $B_m$ et de $B_m$ sur $A_n$ est effectif à l'étape k+1, cela signifie que les quantifications des coefficients de canaux ont produit des valeurs égales à l'étape k, et que l'association de $A_n$ et de $B_m$ est correcte. Sinon, lorsque le désétalement n'est pas réalisé, l'association entre $A_n$ et $B_m$ n'est pas effective. Le signal d'interrogation émis par $A_n$ sert à B pour la quantification du canal de propagation « aller », pour la validation des coefficients de canal quantifiés par A aux étapes précédentes, pour la construction de ses propres signaux d'acquittement. Le signal d'acquittement émis par $B_m$ sert à A pour la quantification du canal de propagation « retour », pour la validation des coefficients de canal quantifiés par B aux étapes précédentes, pour la construction de ses nouveaux signaux d'interrogation.

Les signaux d'interrogation et d'acquittement peuvent transporter ou non des messages. Hormis l'initialisation ils sont toujours construits de manière adaptative en fonction des mesures de canal, ce qui les rend imprédictibles pour tout tiers non informé E et ce, dès l'itération 1. A l'initialisation, ils sont prédéfinis ou choisis dans un ensemble prédéfini. Pour ôter tout risque d'ambiguïté ou de fausse alarme lors des phases de désétalement au niveau de A et de B, on fixe des valeurs importantes pour les périodes P et les facteurs d'étalement SF des séquences PN pour l'interrogation et l'acquittement, et on choisit des ensembles prédéterminés ou des algorithmes de construction de séquences présentant de faibles lobes secondaires d'autocorrélation et d'intercorrélation, selon des procédés connus de l'homme de métier.

Selon une variante de réalisation, le procédé va procéder à une deuxième itération, itération 2, optionnelle. Pour cela, le procédé réitère les étapes explicitées pour la première itération, itération 1 :

- conduisant à l'émission des signaux d'interrogation ($S^{(2)}_{Int,n}$) et d'acquittement ($S^{(2)}_{Acq,m}$), d'après les résultats de mesure $H^{(1)}_{AB,n,m'}(l_1)_{l_1=0\,,...,L-1}$ et $H^{(1)}_{BA,m,n'}(l_1)_{l_1=0\,,...,L-1}$ et d'après les résultats de quantification $Q^{(1)}_{AB,n,m'}(l_1)_{l_1=0\,,...,L-1}$ et $Q^{(1)}_{BA,m,n'}(l_1)_{l_1=0\,,...,L-1}$ produits à l'itération 1,

- produisant les coefficients quantifiés $Q^{(2)}_{AB,n,m'}(l_1)_{l_1=0\,,...,L-1}$ et $Q^{(2)}_{BA,m,n'}(l_1)_{l_1=0\,,...,L-1}$,

- associant de façon univalente et univoque des émetteurs/récepteurs $A_n$ de l'utilisateur A et des émetteurs/récepteurs $B_m$ de l'utilisateur B par la relation entre coefficients quantifiés lors de l'itération 1 $Q^{(1)}_{AB,n,m}(l_1)_{l_1=0\,,...,L-1} = Q^{(1)}_{BA,m,n}(l_1)_{l_1=0\,,...,L-1}$ certifiée par le désétalement de $S^{(2)}_{Int,n}$ par $B_m$ et par le désétalement de $S^{(2)}_{Acq,m}$ par $A_n$

Selon une autre variante de réalisation, à chaque nouvelle itération k+1 des émetteurs/récepteurs $A_n$ de l'utilisateur A et des émetteurs/récepteurs $B_m$ de l'utilisateur B, il y aura un entretien au cours du temps de l'association de A et de B :

- par la relation $Q^{(0)}_{AB,n,m}(l_1)_{l_1=0\,,...,L-1} = Q^{(0)}_{BA,m,n}(l_1)_{l_1=0\,,...,L-1}$ entre coefficients quantifiés lors de la phase initialisation, ce qui conduit à une association univalente et univoque à l'issue de l'itération 1,

- par la relation $Q^{(1)}_{AB,n,m}(l_1)_{l_1=0\,,...,L-1} = Q^{(1)}_{BA,m,n}(l_1)_{l_1=0\,,...,L-1}$ entre coefficients quantifiés lors de l'itération 1, ce qui conduit à une association univalente et univoque à l'issue de l'itération 2,

- par la relation $Q_{AB,n,m}^{(k)}(l_1)_{l_1=0,\ldots,L-1} = Q_{BA,m,n}^{(k)}(l_1)_{l_1=0,\ldots,L-1}$ entre coefficients quantifiés lors de l'itération k, ce qui conduit à une association univalente et univoque à l'issue de l'itération k+1.

L'univalence du processus à chaque itération provient du fait que seules des émissions, réceptions et mesures de canaux conduites de manière simultanée et colocalisée avec les émetteurs/récepteurs de A ou de B permettraient à un tiers E, non informé desdites mesures, de reproduire les mêmes coefficients et les mêmes associations que A et B en appliquant les mêmes procédures de quantification et formatage (dont E serait informé).

Le nombre d'itérations des étapes du procédé selon l'invention varie de 1 à K, K étant fixé par l'application ou par les besoins des utilisateurs.

Selon une variante de réalisation, le procédé utilise une fonction de sélection et de codage correcteur des coefficients de canaux $H_{AB,n,m}^{(k)}(l_1)_{l_1=0,\ldots,L-1}$ et $H_{BA,m,n}^{(k)}(l_1)_{l_1=0,\ldots,L-1}$, pour exécuter les étapes de quantification des coefficients de canaux, aux étapes de quantification c) et f) lors de l'initiation, aux étapes i) et l) lors de l'itération 1, et aux étapes similaires de quantification lors des itérations suivantes. Ceci permet de retenir ou conserver uniquement les coefficients dont l'estimation est la plus fiable, par application d'un critère de seuillage sur la qualité de l'estimation des coefficients et/ou d'une correction d'erreur sur les sorties de quantification $Q_{AB,n,m}^{(k)}(l_1)_{l_1=0,\ldots,L-1}$ et $Q_{BA,m,n}^{(k)}(l_1)_{l_1=0,\ldots,L-1}$, prédéfinis entre les utilisateurs A et B. L'univocité du processus à chaque itération provient de cette sélection et de cette correction d'erreur.

Selon une variante de réalisation, le procédé utilise à l'étape d) de la phase d'initialisation, un processus de construction spécifique des signaux d'acquittement initiaux modifiés $S'^{(0)}{}_{Acq,m}$ faisant dépendre ceux-ci des toutes premières mesures de canaux $H_{AB,n,m}^{(0)}$ et des coefficients quantifiés correspondants $Q_{AB,n,m}^{(0)}(l_1)_{l_1=0,\ldots,L-1}$, tout en ménageant la possibilité pour les récepteurs $A_{n'}$ de l'utilisateur A de reconstruire et désétaler les signaux $S'^{(0)}{}_{Acq,m}$, lesdits signaux d'acquittement initiaux modifiés comportent au moins deux séquences PN, notées $PN^{(0)}{}_{Acq,m}$ et $PN'^{(0)}{}_{Acq,m}$, émises successivement ou simultanément, la première des séquences, $PN^{(0)}{}_{Acq,m}$, étant connue de $A_{n'}$ comme à l'étape d), la seconde des séquences, $PN'^{(0)}{}_{Acq,m}$, étant choisie dans un ensemble prédéterminé connu de B et de A ou construite selon un processus prédéterminé connu de B et de A d'après les valeurs numériques $Q_{AB,n,m'}^{(0)}(l_1)_{l_1=0,\ldots,L-1}$ tout juste quantifiées par B à l'issu de l'étape c); $A_{n'}$ applique alors aux étapes e) et f) non seulement une réception et un désétalement la séquence $PN^{(0)}{}_{Acq,m}$ mais aussi une reconstruction de la séquence $PN'^{(0)}{}_{Acq,m}$ d'après les estimations du canal courant canal $H_{BA,m,n}^{(0)}(l_1)_{l_1=0,\ldots,L-1}$ et les quantifications $Q_{BA,m,n'}^{(0)}(l_1)_{l_1=0,\ldots,L-1}$ qu'il conduit grâce au désétalement de $PN^{(0)}{}_{Acq,m}$ aux étapes e) et f), suivi d'un désétalement immédiat de la séquence $PN'^{(0)}{}_{Acq,m}$. En cas de succès, ce désétalement produit une validation immédiate de l'égalité entre coefficients $Q_{AB,n,m'}^{(0)}(l_1)_{l_1=0,\ldots,L-1} = Q_{BA,m,n}^{(0)}(l_1)_{l_1=0,\ldots,L-1}$ quantifiés en phase d'initialisation

Selon une variante de réalisation, le procédé comporte à chaque nouvelle itération k+1 avec k supérieur ou égal à 0, l'émission de signaux d'acquittement $S^{(k+1)}{}_{Acq,m}$ contenant au moins deux séquences $PN^{(k+1)}{}_{Acq,m}$ et $PN'^{(k+1)}{}_{Acq,m}$ émises séquentiellement ou simultanément, $PN^{(k+1)}{}_{Acq,m}$ étant choisie dans un ensemble prédéterminé ou construite adaptativement d'après les résultats de quantification $Q_{AB,n,m'}^{(k)}(l_1)_{l_1=0,\ldots,L-1}$ à l'itération n°k, et $PN'^{(k+1)}{}_{Acq,m}$ étant choisie dans un ensemble prédéterminé ou construite adaptativement d'après les résultats de quantification courant $Q_{AB,n,m}^{(k+1)}(l_1)_{l_1=0,\ldots,L-1}$ à l'itération n° k+1 ; $A_{n'}$ applique alors non seulement une réception et un désétalement de la séquence $PN^{(k)}{}_{Acq,m}$ reconstruite d'après ses coefficients quantifiés $Q_{BA,m,n'}^{(k)}(l_1)_{l_1=0,\ldots,L-1}$ mais

aussi une reconstruction de la séquence $PN'^{(k+1)}_{Acq,m}$ d'après les estimations courantes de canal $H^{(k+1)}_{BA,m,n'}(l_1)_{l_1=0,...,L-1}$ et les quantifications $Q^{(k+1)}_{BA,m,n'}(l_1)_{l_1=0,...,L-1}$ qu'il conduit grâce au désétalement de $PN^{(k+1)}_{Acq,m}$, suivi d'un désétalement de la séquence $PN'^{(k+1)}_{Acq,m}$. En cas de succès, ce désétalement produit une validation immédiate de l'égalité entre coefficients $Q^{(k+1)}_{AB,n,m'}(l_1)_{l_1=0,...,L-1} = Q^{(k+1)}_{BA,m,n'}(l_1)_{l_1=0,...,L-1}$ quantifiés à l'itération k+1.

Pour la mise en œuvre du procédé, les émetteurs de l'utilisateur A peuvent utiliser des signaux d'interrogation initiaux choisis aléatoirement dans un ensemble de signaux connus de B. Les récepteurs de B n'acquittent que l'un des signaux d'interrogation initiaux reçus, le signal acquitté est soit prédéterminé par les caractéristiques des récepteurs de B, soit choisi aléatoirement par les récepteurs de B, après synchronisation et mesure desdits signaux d'interrogation initiaux, rendant ainsi non-prévisibles les signaux d'interrogation effectivement acquittés par B pour tout tiers non informé E.

Selon une autre manière de procéder, les émetteurs de B utilisent des signaux d'acquittement initiaux choisis aléatoirement dans un ensemble de signaux connus de A. Les récepteurs de A ne traitent en réception que certains des signaux d'acquittement initiaux reçus. Le signal acquitté est soit prédéterminé par les caractéristiques des récepteurs de A, soit choisi aléatoirement par les récepteurs de A, après synchronisation et mesure desdits signaux d'acquittement initiaux, rendant ainsi non-prévisibles les signaux d'acquittement effectivement traités par A pour tout tiers non informé E.

Au niveau des émetteurs de A, il est possible d'appliquer une gigue aléatoire en temps aux signaux d'interrogation, au niveau des émetteurs de B, il est possible d'appliquer une gigue aléatoire en temps aux signaux d'acquittement, ceci rendant ainsi non prédictibles les instants d'émission desdits signaux d'interrogation et d'acquittement pour tout tiers non informé E.

Selon un mode de réalisation, le procédé va utiliser des signaux d'interrogation et d'acquittement (notés respectivement $SI_A$ et $SA_B$), émis conjointement à des signaux balises de l'un ou l'autre utilisateur A ou B (notés respectivement $AI_A$ et $AI_B$), c'est-à-dire de manière auto-interférée, lesdits signaux d'interrogation et d'acquittement étant émis, reçus et traités à chaque itération k grâce à des paramétrages adaptés de leurs puissances d'émission par A et B (notées respectivement $SI^{(k)}_A$ et $SA^{(k)}_B$), des niveaux de réception en B et en A après propagation, des interférences induites par la balise de A reçue en B et par la balise de B reçue en A (notés respectivement $AI^{(k)}_{A->B}$ et $AI^{(k)}_{B->A}$), de leurs niveaux de réception en B et en A des auto interférences issues de B et de A (notés respectivement $Ak^{(k)}_{A->A}$ et $AI^{(k)}_{B->B}$), des dispositifs d'auto-réjection de ces auto-interférences à la réception en A et B (avec des efficacités de réjection notées respectivement $RAI_{A->A}$ et $RAI_{B->B}$), des facteurs d'étalements à l'émission en A et B (notés respectivement $SF^{(k)}_{Int,n}$ et $SF^{(k)}_{Acq,m}$), selon les égalités et inégalités suivantes exprimées en décibels :

- aux réceptions de l'utilisateur B :

$$AI^{(k)}_{A->B} = AI^{(k)}_A - L^{(k)}_{A->B}$$

$$SI^{(k)}_{A->B} = SI^{(k)}_A - L^{(k)}_{A->B}$$

où $L^{(k)}_{A->B}$ représente les pertes totales de propagation de A vers B,

$$SF^{(k)}_{Int,n} \geq 10.\log_{10}[10^{\wedge}(SI^{(k)}_{A->B}/10)] -$$
$$10.\log_{10}[10^{\wedge}((AI_{B->B}-RAI_{B->B})/10) + 10^{\wedge}(AI^{(k)}_{A->B}/10)]$$
$$+ \eta_B,$$

- aux réceptions de l'utilisateur A :

$$AI^{(k)}_{B->A} = AI^{(k)}_B - L^{(k)}_{B->A}$$

$$SI^{(k)}_{B->A} = SI^{(k)}_A - L^{(k)}_{B->A}$$

où $L^{(k)}_{B\text{-}>A}$ représente les pertes totales de propagation de B vers A

$$SF^{(k)}_{Int,n} \geq 10.\log_{10}[10^{\wedge}(SI^{(k)}_{B\text{-}>A}/10)] -$$

$$10.\log_{10}[10^{\wedge}((AI_{A\text{-}>A}\text{-}RAI_{A\text{-}>A})/10) + 10^{\wedge}(AI^{(k)}_{B\text{-}>A}/10)]$$

$$+ \eta_A,$$

les marges $\eta_B$ et $\eta_A$ étant liées aux performances des équipements radio utilisés par les récepteurs de A et de B.

Selon une autre variante de réalisation, le procédé va émettre, conjointement aux messages d'échanges de données entre les utilisateurs, des signaux d'interrogation et d'acquittement auto-interférés par ces messages, lesdits signaux d'interrogation et d'acquittement étant émis, reçus et traités à chaque itération k grâce à des paramétrages adaptés de leurs puissances d'émission par A et B, de leurs niveaux de réception en B et en A après propagation, des interférences induites par les messages de A reçus en B et par les messages de B reçus en A, des niveaux de réception en B et en A des auto interférences issues de B et de A, des dispositifs d'auto-réjection de ces auto-interférences à la réception en A et B, des facteurs d'étalements à l'émission en A et B), selon des inégalités aux expressions similaires à la revendication précédente.

Le procédé selon l'invention permet avantageusement de sécuriser les transmissions de données entre deux utilisateurs, sans avoir recours à un élément externe au réseau, en se basant sur des propriétés caractéristiques du canal de propagation propres aux deux utilisateurs pour les associer de manière sécurisée. Le procédé utilise le caractère aléatoire du canal légitime radio pour construire de manière adaptative des signaux d'interrogation et d'acquittement entre les deux utilisateurs, rendre ces signaux imprédictibles, univalents et univoques, afin de fournir un support pour augmenter la sécurité de la couche physique, la sécurité des accès au réseau, et notamment sécuriser les protocoles de négociation entre les utilisateurs, authentifier les données qu'ils mesurent, puis identifier les utilisateurs et contrôler l'intégrité des messages qu'ils échangent.

## Revendications

1. Procédé d'association univalente et univoque, avant établissement d'un protocole de communication, à partir du canal de propagation (AU_CP) entre au moins un premier utilisateur A et un deuxième utilisateur B munis chacun de un ou de plusieurs émetteurs/récepteurs de transmission ($A_1 ... A_{NA}$) indexés par n et n' pour l'utilisateur A, ($B_1...$ $B_{NB}$) indexés par m et m' pour l'utilisateur B **caractérisé en ce qu'**il comporte au moins les étapes suivantes :

   Initialisation :

      a) (41), Emission par chaque émetteur $A_n$ de l'utilisateur A de signaux d'interrogation initiaux $S^{(0)}_{Int,n}$ pour l'émetteur d'indice n, constitués d'au moins une séquence aléatoire $PN^{(0)}_{Int,n}$ connue de l'utilisateur B, de facteur d'étalement $SF^{(0)}_{Int,n}$,
      b) (43), Réception et désétalement par chaque récepteur $B_{m'}$ de l'utilisateur B de la séquence aléatoire $PN^{(0)}_{Int,n}$ de chacun des signaux d'interrogation initiaux $S^{(0)}_{Int,n}$ (42), mesure par lesdits récepteurs $B_{m'}$ du canal de propagation $H^{(0)}_{AB,n,m'}$ entre $A_n$ et $B_{m'}$ sur la longueur de $L^{(0)}$ échantillons; estimation des coefficients $H^{(0)}_{AB,n,m'}(l_1)_{l_1=0,...,L-1}$ de la réponse impulsionnelle complexe correspondante ou des coefficients de la réponse en fréquence complexe correspondante,

      c) Quantification (44) par l'utilisateur B des coefficients complexes $H^{(0)}_{AB,n,m'}(l_1)_{l_1=0,...,L-1}$ issus de ses mesures pour produire des valeurs numériques $Q^{(0)}_{AB,n,m'}(l_1)_{l_1=0,...,L-1}$,
      d) Emission (45) par chaque émetteur $B_m$ de l'utilisateur B de signaux d'acquittement initiaux $S^{(0)}_{Acq,m}$ constitués d'au moins une séquence aléatoire notée $PN^{(0)}_{Acq,m}$ connue de l'utilisateur A, de facteur d'étalement $SF^{(0)}_{Acq,m}$,
      e) Réception et désétalement par chaque récepteur $A_{n'}$ de la séquence aléatoire $PN^{(0)}_{acq,m}$ de chacun des signaux d'acquittement initiaux $S^{(0)}_{Acq,m}$ (46), mesure par lesdits récepteurs $A_{n'}$ du canal de propagation

$H^{(0)}_{BA,m,n'}$ entre $B_m$ et $A_{n'}$ sur la longueur de $L^{(0)}$ échantillons; estimation des coefficients $H^{(0)}_{BA,m,n'}(l_1)_{l_1=0,...,L-1}$ de la réponse impulsionnelle complexe correspondante ou des coefficients de la réponse en fréquence complexe correspondante (47), les coefficients $H^{(0)}_{BA,m,n'}(l_1)_{l_1=0,...,L-1}$ étant identiques à ceux estimés par B à l'étape c) $H^{(0)}_{AB,n,m'}(l_1)_{l_1=0,...,L-1}$ lorsque le canal de propagation est réciproque et que les émetteurs récepteurs considérés pour A et B coïncident dans les deux sens d'interrogation et d'acquittement, avec n=n' et m=m',

f) Quantification (48) par l'utilisateur A des coefficients complexes $H^{(0)}_{BA,m,n'}(l_1)_{l_1=0,...,L-1}$ issus de ses mesures pour produire des valeurs numériques $Q^{(0)}_{BA,m,n'}(l_1)_{l_1=0,...,L-1}$,

Itération 1 :

g) Emission (49) par chacun des émetteurs $A_n$ de nouveaux signaux d'interrogation, $S^{(1)}_{Int,n}$, constitués d'au moins une nouvelle séquence aléatoire $PN^{(1)}_{Int,n}$ de facteur d'étalement $SF^{(1)}_{Int,n}$ choisie dans un ensemble prédéterminé connu de A et B ou construite selon un processus prédéterminé connu de A et B d'après les valeurs numériques $Q^{(0)}_{BA,m,n'}(l_1)_{l_1=0,...,L-1}$ déterminées par A à l'issue de l'étape f),

h) Réception et désétalement de la séquence $PN^{(1)}_{Int,n}$ du signal $S^{(1)}_{Int,n}$ par chaque récepteur $B_{m'}$, (50), $B_m$ qui reconstruit préalablement la séquence aléatoire $PN^{(1)}_{Int,n}$ choisie ou construite par $A_n$, selon le même processus que $A_n$, en exploitant les valeurs numériques $Q^{(0)}_{AB,n,m'}(l_1)_{l_1=0,...,L-1}$ déterminées par B lors de la quantification effectuée à l'étape c) des coefficients $H^{(0)}_{AB,n,m'}(l_1)_{l_1=0,...,L-1}$, valeurs numériques égales à celle produites par A à l'étape f) lorsque le canal de propagation est réciproque, que n=n' et que m=m'); lorsque m=m' et n=n', validation par B, grâce au désétalement de $PN^{(1)}_{Int,n}$ en réception par $B_m$, de l'égalité entre coefficients $Q^{(0)}_{AB,n,m}(l_1)_{l_1=0,...,L-1} = Q^{(0)}_{BA,m,n}(l_1)_{l_1=0,...,L-1}$ quantifiés lors de la phase d'initialisation, (51); mesure actualisée par chaque récepteur $B_{m'}$ du canal de propagation $H^{(1)}_{AB,n,m'}$, entre $A_n$ et $B_{m'}$ sur la longueur de $L^{(1)}$ échantillons, estimation des coefficients $H^{(1)}_{AB,n,m'}(l_1)_{l_1=0,...,L-1}$ de la réponse impulsionnelle complexe correspondante ou des coefficients de la réponse en fréquence complexe correspondante (52),

i) Quantification (53) par l'utilisateur B des coefficients $H^{(1)}_{AB,n,m'}(l_1)_{l_1=0,...,L-1}$ issus de ses mesures pour produire des valeurs numériques $Q^{(1)}_{AB,n,m'}(l_1)_{l_1=0,...,L-1}$,

j) Emission (54) par chaque émetteur $B_m$ de nouveaux signaux d'acquittement, notés $S^{(1)}_{Acq,m}$, constitués d'au moins une séquence aléatoire notée $PN^{(1)}_{Acq,m}$ de facteur d'étalement $SF^{(1)}_{Acq,m}$, choisie dans un ensemble prédéterminé connu de A et B ou construite selon un processus prédéterminé connu de A et B d'après les valeurs numériques $Q^{(0)}_{AB,n,m}(l_1)_{l_1=0,...,L-1}$ déterminées par B à l'issu de l'étape c),

k) Réception et désétalement par chaque récepteur $A_{n'}$ des séquences aléatoires $PN^{(1)}_{acq,m}$ de chacun des signaux d'acquittement ($S^{(1)}_{Acq,m}$) (55), $A_{n'}$ qui reconstitue préalablement la séquence $PN^{(1)}_{acq,m}$ choisie ou construite par $B_m$, selon le même processus que $B_m$, en exploitant les valeurs numériques $Q^{(O)}_{BA,m,n'}(l_1)_{l_1=0,...,L-1}$ que A a déterminées à l'étape f), valeurs numériques égales à celle produites par B à l'étape c), soit $Q^{(O)}_{AB,n,m'}(l_1)_{l_1=0,...,L-1}$ lorsque le canal de propagation est réciproque, que n=n' et que m=m'; toujours lorsque m=m' et n=n', validation par A, grâce au désétalement de $PN^{(1)}_{Acq,m'}$ de

l'égalité entre coefficients $Q^{(0)}_{BA,m,n}(l_1)_{l_1=0,...,L-1} = Q^{(0)}_{AB,n,m}(l_1)_{l_1=0,...,L-1}$ quantifiés lors de la phase d'initialisation, (56) ; l'association univalente des émetteurs/récepteurs $A_n$ de l'utilisateur A et des émetteurs/récepteurs $B_m$ de l'utilisateur B devient alors effective grâce aux relations d'égalités entre coefficients quantifiés $Q^{(0)}_{AB,n,m}(l_1)_{l_1=0,...,L-1} = Q^{(0)}_{BA,m,n}(l_1)_{l_1=0,...,L-1}$ validées en $B_m$ à l'étape h) par la réception et le désétalement de $PN^{(1)}_{Int,n}$ et validées en $A_n$ à cette étape k), (56) par la réception et le désétalement de $PN^{(1)}_{acq,m}$; mesure par chaque récepteur $A_{n'}$ du canal de propagation $H^{(1)}_{BA,m,n'}$ entre

$B_m$ et $A_{n'}$ sur la longueur de $L^{(1)}$ échantillons ; estimation des coefficients $H^{(1)}_{BA,m,n'}(l_1)_{l_1=0,...,L-1}$ de la réponse impulsionnelle complexe correspondante (57), ou des coefficients de la réponse en fréquence complexe, les coefficients $H^{(1)}_{BA,m,n'}(l_1)_{l_1=0,...,L-1}$ étant identiques à ceux estimés par B à l'étape h) $H^{(1)}_{AB,n,m'}(l_1)_{l_1=0,...,L-1}$ lorsque le canal de propagation est réciproque et que les émetteurs récepteurs considérés pour A et B coïncident dans les deux sens d'interrogation et d'acquittement, n=n' et m=m',

l) Quantification par l'utilisateur A des coefficients complexes $H^{(1)}_{BA,m,n'}(l_1)_{l_1=0,...,L-1}$ issus de ses mesures pour produire des coefficients numériques $Q^{(1)}_{BA,m,n'}(l_1)_{l_1=0,...,L-1}$ (58).

2. Procédé selon la revendication 1 **caractérisé en ce qu'**il comporte au moins une deuxième itération des étapes de la première itération avec l'émission de signaux d'interrogation $S^{(2)}_{Int,n}$ contenant la séquence $PN^{(2)}_{Int,n}$ et de signaux d'acquittement $S^{(2)}_{Acq,m}$ contenant la séquence $PN^{(2)}_{Acq,m}$, élaborés d'après les résultats de mesure

$H^{(1)}_{AB,n,m'}(l_1)_{l_1=0,...,L-1}$ et $H^{(1)}_{BA,m,n'}(l_1)_{l_1=0,...,L-1}$ et d'après les résultats de quantification

$Q^{(1)}_{AB,n,m'}(l_1)_{l_1=0,...,L-1}$ et $Q^{(1)}_{BA,m,n'}(l_1)_{l_1=0,...,L-1}$ produits à l'itération 1, la quantification de nouveaux coefficients $Q^{(2)}_{AB,n,m'}(l_1)_{l_1=0,...,L-1}$ et $Q^{(2)}_{BA,m,n'}(l_1)_{l_1=0,...,L-1}$ , et l'association univalente et univoque des émet-teurs/récepteurs $A_n$ de l'utilisateur A et des émetteurs/récepteurs $B_m$ de l'utilisateur B par la relation entre coefficients quantifiés lors de l'itération 1 $Q^{(1)}_{AB,n,m}(l_1)_{l_1=0,...,L-1} = Q^{(1)}_{BA,m,n}(l_1)_{l_1=0,...,L-1}$ , association validée par la réception et le désétalement des séquences d'interrogation $PN^{(2)}_{Int,n}$ et d'acquittement $PN^{(2)}_{Acq,m}$ émis par $A_n$ et $B_m$ lors de la deuxième itération.

3. Procédé selon la revendication 2 **caractérisé en ce qu'**il comporte à chaque nouvelle itération k+1 avec k supérieur à 1, l'émission de signaux d'interrogation $S^{(k+1)}_{Int,n}$ contenant la séquence $PN^{(k+1)}_{Int,n}$ et de signaux d'acquittement $S^{(k+1)}_{Acq,m}$ contenant la séquence $PN^{(k+1)}_{Acq,m}$ construits d'après les résultats de mesure de l'itération k

$H^{(k)}_{AB,n,m'}(l_1)_{l_1=0,...,L-1}$ et $H^{(k)}_{BA,m,n'}(l_1)_{l_1=0,...,L-1}$ et d'après les résultats de quantification de l'itération k

$Q^{(k)}_{AB,n,m'}(l_1)_{l_1=0,...,L-1}$ et $Q^{(k)}_{BA,m,n'}(l_1)_{l_1=0,...,L-1}$ , et l'association univalente et univoque des émetteurs/ré-cepteurs $A_n$ de l'utilisateur A et des émetteurs/récepteurs $B_m$ de l'utilisateur B en utilisant la relation

$Q^{(k)}_{AB,n,m}(l_1)_{l_1=0,...,L-1} = Q^{(k)}_{BA,m,n}(l_1)_{l_1=0,...,L-1}$ entre coefficients quantifiés lors de l'itération k, association validée par la réception et le désétalement par $B_m$ et $A_n$ des signaux d'interrogation et d'acquittement émis par $A_n$ et $B_m$ lors de la (k+1)ième itération.

4. Procédé selon l'une des revendications précédentes **caractérisé en ce qu'**il utilise aux étapes de quantification c) et f) lors de l'initiation, aux étapes i) et l) lors de l'itération 1, et aux étapes similaires lors des itérations suivantes, une fonction de sélection et de codage correcteur des coefficients de canaux $H_{AB,n,m}^{(k)}(l_1)_{l_1=0,...,L-1}$ et $H_{BA,m,n}^{(k)}(l_1)_{l_1=0,...,L-1}$ adaptée à retenir uniquement des coefficients dont l'estimation est la plus fiable, par application d'un critère de seuillage sur la qualité de l'estimation des coefficients précités et d'une correction d'erreur sur les sorties de quantification $Q_{AB,n,m}^{(k)}(l_1)_{l_1=0,...,L-1}$ et $Q_{BA,m,n}^{(k)}(l_1)_{l_1=0,...,L-1}$, ce critère de seuillage et cette correction étant prédéfinis entre les utilisateurs A et B.

5. Procédé selon l'un des revendications précédentes **caractérisé en ce que** $B_m$ utilise à l'étape d) de la phase d'initialisation un processus de construction spécifique des signaux d'acquittements initiaux modifiés S'$^{(0)}$_{Acq,m} faisant dépendre ceux-ci des toutes premières mesures de canaux $H_{AB,n,m'}^{(0)}$ et des coefficients quantifiés correspondants $Q_{AB,n,m'}^{(0)}(l_1)_{l_1=0,...,L-1}$, tout en ménageant la possibilité pour les récepteurs $A_{n'}$ de l'utilisateur A de reconstruire et désétaler les signaux S'$^{(0)}$_{Acq,m}, lesdits signaux d'acquittement initiaux modifiés comportent au moins deux séquences PN, notées PN$^{(0)}$_{Acq,m} et PN'$^{(0)}$_{Acq,m}, émises successivement ou simultanément, la première des séquences, PN$^{(0)}$_{Acq,m}, étant connue de $A_{n'}$ comme à l'étape d), la seconde des séquences, PN'$^{(0)}$_{Acq,m}, étant choisie dans un ensemble prédéterminé connu de B et de A ou construite selon un processus prédéterminé connu de B et de A d'après les valeurs numériques $Q_{AB,n,m'}^{(0)}(l_1)_{l_1=0,...,L-1}$ tout juste quantifiées par B à l'issue de l'étape c) ; et **en ce que** $A_{n'}$ applique aux étapes e) et f) de l'initialisation non seulement une réception et un désétalement la séquence PN$^{(0)}$_{Acq,m} mais aussi une reconstruction de la séquence PN'$^{(0)}$_{Acq,m} d'après les estimations de canal $H_{BA,m,n'}^{(0)}(l_1)_{l_1=0,...,L-1}$ et les quantifications $Q_{BA,m,n'}^{(0)}(l_1)_{l_1=0,...,L-1}$ qu'il conduit grâce au désétalement de PN$^{(0)}$_{Acq,m} aux étapes e) et f) suivi d'un désétalement de la séquence PN'$^{(0)}$_{Acq,m}, pour produire une validation immédiate de l'égalité entre les coefficients $Q_{AB,n,m'}^{(0)}(l_1)_{l_1=0,...,L-1}$ et $Q_{BA,m,n'}^{(0)}(l_1)_{l_1=0,...,L-1}$ quantifiés en phase d'intitialisation.

6. Procédé selon la revendication 3 **caractérisé en ce qu'**il comporte à chaque nouvelle itération k+1 avec k supérieur ou égal à 0, l'émission de signaux d'acquittement S$^{(k+1)}$_{Acq,m} contenant au moins deux séquences PN$^{(k+1)}$_{Acq,m} et PN'$^{(k+1)}$_{Acq,m} émises séquentiellement ou simultanément, PN$^{(k+1)}$_{Acq,m} étant choisie dans un ensemble prédéterminé ou construite adaptativement d'après les résultats de quantification $Q_{AB,n,m'}^{(k)}(l_1)_{l_1=0,...,L-1}$ à l'itération n°k, et PN'$^{(k+1)}$_{Acq,m} étant choisie dans un ensemble prédéterminé ou construite adaptativement d'après les résultats de quantification courant $Q_{AB,n,m'}^{(k+1)}(l_1)_{l_1=0,...,L-1}$ à l'itération n° k+1 ; caractérisé d'autre part **en ce que** $A_{n'}$ applique non seulement une réception et un désétalement la séquence PN$^{(k)}$_{Acq,m} reconstruite d'après ses coefficients quantifiés $Q_{BA,m,n'}^{(k)}(l_1)_{l_1=0,...,L-1}$ mais aussi une reconstruction de la séquence PN'$^{(k+1)}$_{Acq,m} d'après les estimations de canal $H_{BA,m,n'}^{(k+1)}(l_1)_{l_1=0,...,L-1}$ et les quantifications $Q_{BA,m,n'}^{(k+1)}(l_1)_{l_1=0,...,L-1}$ qu'il conduit grâce au désétalement de PN$^{(k+1)}$_{Acq,m}, suivi d'un désétalement de la séquence PN'$^{(k+1)}$_{Acq,m} pour valider immédiatement l'égalité entre les coefficients $Q_{AB,n,m'}^{(k+1)}(l_1)_{l_1=0,...,L-1}$ et $Q_{BA,m,n'}^{(k+1)}(l_1)_{l_1=0,...,L-1}$ quantifiés à l'itération k+1.

7. Procédé selon l'une des revendications précédentes **caractérisé en ce que** les émetteurs de A utilisent des signaux d'interrogation initiaux choisis aléatoirement dans un ensemble de signaux connus de B, et **en ce que** les récepteurs de B n'acquittent que l'un des signaux d'interrogation initiaux reçus, soit prédéterminé par les caractéristiques des récepteurs de B, soit choisi aléatoirement par les récepteurs de B, après synchronisation, désétalement et mesure desdits signaux d'interrogation initiaux.

8. Procédé selon l'une des revendications précédentes **caractérisé en ce que** les émetteurs de B utilisent des signaux d'acquittement initiaux choisis aléatoirement dans un ensemble de signaux connus de A, **en ce que** les récepteurs de A ne traitent en réception que certains des signaux d'acquittement initiaux reçus, soit prédéterminé par les caractéristiques des récepteurs de A, soit choisis aléatoirement par les récepteurs de A, après synchronisation désétalement et mesure desdits signaux d'acquittement initiaux.

9. Procédé selon l'une des revendications précédentes **caractérisé en ce que** les émetteurs de A appliquent une gigue aléatoire en temps aux signaux d'interrogation et les émetteurs de B appliquent une gigue aléatoire en temps aux signaux d'acquittement.

10. Procédé selon l'une des revendications précédentes **caractérisé en ce qu'**il utilise des signaux d'interrogation et d'acquittement $SI_A$ et $SA_B$, émis conjointement à des signaux balises de l'un ou l'autre utilisateur A ou B, $AI_A$ et $AI_B$, c'est-à-dire de manière auto-interférée, lesdits signaux d'interrogation et d'acquittement étant émis reçus et traités à chaque itération k grâce à des paramétrages adaptés de leurs puissances d'émission par A et B, $SI^{(k)}_A$ et $SA^{(k)}_B$, de leurs niveaux de réception en B et en A, des interférences induites par la balise de A reçue en B et par la balise de B reçue en A, $AI^{(k)}_{A \to B}$ et $AI^{(k)}_{B \to A}$, des niveaux de réception en B et en A des auto-interférences issues de B et de A, $AI^{(k)}_{A \to A}$ et $AI^{(k)}_{B \to B}$, des dispositifs d'auto-réjection de ces auto-interférences à la réception en A et B, $RAI_{A \to A}$ et $RAI_{B \to B}$, des facteurs d'étalement à l'émission en A et B, $SF^{(k)}_{Int,n}$ et $SF^{(k)}_{Acq,m}$, selon les égalités et inégalités suivantes exprimées en décibel :

- aux réceptions de l'utilisateur B :

$$AI^{(k)}_{A \to B} = AI^{(k)}_A - L^{(k)}_{A \to B}$$

$$SI^{(k)}_{A \to B} = SI^{(k)}_A - L^{(k)}_{A \to B}$$

où $L^{(k)}_{A \to B}$ représente les pertes totales de propagation de A vers B,

$$SF^{(k)}_{Int,n} \geq 10.\log_{10}[10^{\wedge}(SI^{(k)}_{A \to B}/10)] -$$
$$10.\log_{10}[10^{\wedge}((AI_{B \to B}-RAI_{B \to B})/10) + 10^{\wedge}(AI^{(k)}_{A \to B}/10)]$$
$$+ \eta_B,$$

- aux réceptions de l'utilisateur A :

$$AI^{(k)}_{B \to A} = AI^{(k)}_B - L^{(k)}_{B \to A}$$

$$SI^{(k)}_{B \to A} = SI^{(k)}_A - L^{(k)}_{B \to A}$$

où $L^{(k)}_{B \to A}$ représente les pertes totale des propagation de B vers A

$$SF^{(k)}_{Int,n} \geq 10.\log_{10}[10^{\wedge}(SI^{(k)}_{B \to A}/10)] -$$
$$10.\log_{10}[10^{\wedge}((AI_{A \to A}-RAI_{A \to A})/10) + 10^{\wedge}(AI^{(k)}_{B \to A}/10)]$$
$$+ \eta_A,$$

les marges $\eta_B$ et $\eta_A$ étant liées aux performances des équipements radio utilisés par les récepteurs de A et de B.

**11.** Procédé selon la revendication 10 **caractérisé en ce qu'**il utilise des signaux d'interrogation et d'acquittement émis conjointement aux messages d'échanges de données entre les utilisateurs, c'est-à-dire de manière auto-interférée, lesdits signaux d'interrogation et d'acquittement étant émis, reçus et traités à chaque itération k grâce à des paramétrages adaptés de leurs puissances d'émission par A et B, de leurs niveaux de réception en B et en A, des interférences induites par les messages de A reçus en B et par les messages de B reçus en A, des niveaux de réception en B et en A des auto-interférences issues de B et de A, des dispositifs d'auto-réjection de ces auto-interférences à la réception en A et B, des facteurs d'étalement à l'émission en A et B), selon des égalités et inégalités aux expressions similaires à la revendication 10.

**12.** Procédé selon l'une des revendications précédentes **caractérisé en ce qu'**il utilise un mode de communication Duplex temporel entre utilisateurs employant une même fréquence porteuse pour les échanges en émission et en réception dans les deux sens de transmission et bénéficie directement de la réciprocité du canal de propagation sur la fréquence unique employée pour les interrogations et les acquittements.

**13.** Procédé selon l'une des revendications précédentes **caractérisé en ce qu'**il est dupliqué sur l'ensemble des fréquences porteuses employées par des utilisateurs à mode Duplex fréquentiel employant des fréquences porteuses différentes pour leurs échanges en émission et en réception selon le sens de transmission, afin de bénéficier de la réciprocité du canal de propagation sur chacune des fréquences employées pour les interrogations et les acquittements.

**14.** Procédé selon l'une des revendications précédentes **caractérisé en ce que** l'on réitère les étapes du procédé pour chaque nouvelle transmission de phonie ou de données.

**15.** Procédé selon l'une des revendications précédentes **caractérisé en ce que** l'on réitère les étapes du procédé pour chaque nouveau message d'une transmission de phonie ou de données en cours.

**16.** Procédé selon l'une des revendications précédentes **caractérisé en ce qu'**il utilise des émetteurs et récepteurs adaptés à des radiocommunications.

**17.** Procédé selon l'une des revendications précédentes **caractérisé en ce que** les émetteurs/récepteurs de l'utilisateur A sont reliés aux éléments d'antennes d'un réseau utilisé par A et les émetteurs/récepteurs de l'utilisateur B sont reliés aux éléments d'antennes d'un réseau utilisé par B dans le cadre de protocoles dits de type MISO, SIMO, MIMO ou « massive MIMO ».

**18.** Procédé selon l'une des revendications précédentes **caractérisé en ce que** les émetteurs/récepteurs de l'utilisateur A sont des stations de base ou des nœuds d'un réseau de radiocommunication et les émetteurs/récepteurs de l'utilisateur B sont des terminaux ou d'autres nœuds dudit réseau de radiocommunication.

**19.** Procédé selon l'une des revendications précédentes **caractérisé en ce que** les émetteurs et récepteurs sont adaptés à des transmissions acoustiques.

**20.** Procédé selon l'une des revendications précédentes **caractérisé en ce que** les émetteurs et récepteurs sont adaptés à des transmissions optiques.

**Patentansprüche**

**1.** Verfahren zum einwertigen und eindeutigen Assoziieren vor dem Einrichten eines Kommunikationsprotokolls auf der Basis des Ausbreitungskanals (AU_CP) zwischen wenigstens einem ersten Benutzer A und einem zweiten Benutzer B, jeweils ausgestattet mit mehreren Sendern/Empfängern von Übertragungen ($A_1...A_{NA}$), indexiert durch n und n' für Benutzer A, ($B_1... B_{NB}$), indexiert durch m und m' für Benutzer B, **dadurch gekennzeichnet, dass** es wenigstens die folgenden Schritte beinhaltet:

Initialisierung:

a) (41) Senden, durch jeden Sender $A_n$ des Benutzers A, von Anfangsabfragesignalen $S^{(0)}_{Int,n}$ zum Sender von Index n, gebildet aus wenigstens einer dem Benutzer B bekannten Zufallsfolge $PN^{(0)}_{Int,n}$ mit einem Spreizfaktor $SF^{(0)}_{Int,n}$,

b) (43) Empfangen und Entspreizen, durch jeden Empfänger $B_{m'}$ des Benutzers B, der Zufallsfolge $PN^{(0)}_{Int,n}$ jedes der Anfangsabfragesignale $S^{(0)}_{Int,n}$ (42), gemessen durch die Empfänger $B_{m'}$, des Ausbreitungskanals $H^{(0)}_{AB,n,m'}$ zwischen $A_n$ und $B_{m'}$ auf der Länge $L^{(0)}$ von Samples; Schätzen von Koeffizienten $H^{(0)}_{AB,n,m'}(l_1)_{l_1=0,...,L-1}$ der entsprechenden komplexen Impulsantwort oder von Koeffizienten der entsprechenden komplexen Frequenzantwort,

c) Quantifizieren (44), durch den Benutzer B, der komplexen Koeffizienten $H^{(0)}_{AB,n,m'}(l_1)_{l_1=0,...,L-1}$ von seinen Messungen zum Produzieren von digitalen Werten $Q^{(0)}_{AB,n,m'}(l_1)_{l_1=0,...,L-1}$,

d) Senden (45), durch jeden Sender $B_m$ des Benutzers B, von Anfangsquittiersignalen $S^{(0)}_{Acq,m}$, gebildet aus wenigstens einer dem Benutzer A bekannten, $PN^{(0)}_{Acq,m}$ genannten Zufallsfolge mit dem Spreizfaktor $SF^{(0)}_{Acq,m}$,

e) Empfangen und Entspreizen, durch jeden Empfänger $A_{n'}$, der Zufallsfolge $PN^{(0)}_{Acq,m}$, jedes der Anfangsquittiersignale $S^{(0)}_{Acq,m}$ (46), gemessen durch die Empfänger $A_{n'}$, des Ausbreitungskanals $H^{(0)}_{BA,m,n'}$ zwischen $B_m$ und $A_{n'}$ auf der Länge von $L^{(0)}$ Samples; Schätzen der Koeffizienten $H^{(0)}_{BA,m,n'}(l_1)_{l_1=0,...,L-1}$ der entsprechenden komplexen Impulsantwort oder der Koeffizienten der entsprechenden komplexen Frequenzantwort (47), wobei die Koeffizienten $H^{(0)}_{BA,m,n'}(l_1)_{l_1=0,...,L-1}$ mit den von B in Schritt c) geschätzten $H^{(0)}_{AB,n,m'}(l_1)_{l_1=0,...,L-1}$ identisch sind, wenn der Ausbreitungskanal reziprok ist, und die betrachteten Sender/Empfänger für A und B mit den beiden Abfrage- und Quittierrichtungen zusammenfallen, wobei n=n' und m=m',

f) Quantifizieren (48), durch Benutzer A, der von seinen Messungen ausgegebenen komplexen Koeffizienten $H^{(0)}_{BA,m,n'}(l_1)_{l_1=0,...,L-1}$ zum Produzieren der digitalen Werte $Q^{(0)}_{BA,m,n'}(l_1)_{l_1=0,...,L-1}$,

Iteration 1:

g) Senden (49), durch jeden der Sender $A_n$, neuer Abfragesignale $S^{(1)}_{Int,n}$, gebildet von wenigstens einer neuen Zufallsfolge $PN^{(1)}_{Int,n}$ mit Spreizfaktor $SF^{(1)}_{Int,n}$, ausgewählt in einem A und B bekannten vorbestimmten Satz oder konstruiert gemäß einer A und B bekannten vorbestimmten Prozedur anhand von digitalen Werten $Q^{(0)}_{BA,m,n'}(l_1)_{l_1=0,...,L-1}$, bestimmt durch A beim Vollenden von Schritt f),

h) Empfangen und Entspreizen der Folge $PN^{(1)}_{Int,n}$ des Signals $S^{(1)}_{Int,n}$ durch jeden Empfänger $B_{m'}$, (50), wobei $B_{m'}$ zuvor die Zufallsfolge $PN^{(1)}_{Int,n}$ rekonstruiert, ausgewählt oder konstruiert durch $A_n$, gemäß derselben Prozedur wie $A_n$, unter Nutzung der digitalen Werte $Q^{(0)}_{AB,n,m'}(l_1)_{l_1=0,...,L-1}$, bestimmt von B bei der in Schritt c) durchgeführten Quantifizierung der Koeffizienten $H^{(0)}_{AB,n,m'}(l_1)_{l_1=0,...,L-1}$, wobei die digitalen Werte gleich den von A in Schritt f) produzierten sind, wenn der Ausbreitungskanal reziprok ist, wenn n=n' und m=m'; Validieren durch B, wenn m=m' und n=n' ist, dank der Entspreizung von $PN^{(1)}_{Int,n}$ bei Empfang durch $B_m$, der Gleichheit zwischen Koeffizienten $Q^{(0)}_{AB,n,m}(l_1)_{l_1=0,...,L-1} = Q^{(0)}_{BA,m,n}(l_1)_{l_1=0,...,L-1}$, quantifiziert in der Initialisierungsphase (51); aktualisiertes Messen, durch jeden Empfänger $B_{m'}$, des Ausbreitungskanals $H^{(1)}_{AB,n,m'}$ zwischen $A_n$ und $B_{m'}$ auf der Länge $L^{(1)}$ von Samples, Schätzen der Koeffizienten $H^{(1)}_{AB,n,m'}(l_1)_{l_1=0,...,L-1}$ der entsprechenden komplexen Impulsantwort oder der Koeffizienten der entsprechenden komplexen Frequenzantwort (52),

i) Quantifizieren (53), durch Benutzer B, der von seinen Messungen ausgegebenen Koeffizienten $H^{(1)}_{AB,n,m'}(l_1)_{l_1=0,...,L-1}$ zum Produzieren der digitalen Werte $Q^{(1)}_{AB,n,m'}(l_1)_{l_1=0,...,L-1}$,

j) Senden (54), durch jeden Sender $B_m$, von $S^{(1)}_{Acq,m}$ genannten neuen Quittiersignalen, gebildet aus wenigstens einer $PN^{(1)}_{Aq,m}$ genannten Zufallsfolge mit Spreizfaktor $SF^{(1)}_{Aq,m}$, ausgewählt aus einem A und B bekannten vorbestimmten Satz oder konstruiert gemäß einer A und B bekannten vorbestimmten Prozedur gemäß den von B am Ausgang von Schritt c) bestimmten digitalen Werten $Q^{(0)}_{AB,n,m'}(l_1)_{l_1 = 0\,,...,L-1}$,

k) Empfangen und Entspreizen, durch jeden Empfänger $A_{n'}$, von Zufallsfolgen $PN^{(1)}_{Acq,m}$ jedes der Quittiersignale $(S^{(1)}_{Acq,m})$ (55), wobei $A_{n'}$ zuvor die Folge $PN^{(1)}_{Acq,m}$ rekonstruiert, ausgewählt oder konstruiert durch $B_m$, gemäß derselben Prozedur wie $B_m$, unter Nutzung der digitalen Werte $Q^{(0)}_{BA,m,n'}(l_1)_{l_1 = 0\,,...,L-1}$, die A in Schritt f) bestimmt hat, wobei die digitalen Werte gleich den von B in Schritt c) produzierten sind, nämlich $Q^{(0)}_{AB,n,m'}(l_1)_{l_1 = 0\,,...,L-1}$, wenn der Ausbreitungskanal reziprok ist, wenn n=n' und m=m' ist; Validieren durch A, immer wenn m=m' und n=n', dank der Entspreizung von $PN^{(1)}_{Acq,m}$, der Gleichheit zwischen Koeffizienten $Q^{(0)}_{BA,m,n}(l_1)_{l_1 = 0\,,...,L-1} = Q^{(0)}_{AB,n,m}(l_1)_{l_1 = 0\,,...,L-1}$, quantifiziert in der Initialisierungsphase (56); einwertiges Assoziieren der Sender/Empfänger $A_n$ des Benutzers A und der Sender/Empfänger $B_m$ des Benutzers B, die dank der Gleichheitsbeziehungen zwischen den quantifizierten Koeffizienten $Q^{(0)}_{AB,n,m}(l_1)_{l_1 = 0\,,...,L-1} = Q^{(0)}_{BA,m,n}(l_1)_{l_1 = 0\,,...,L-1}$ effektiv werden, validiert in $B_m$ in Schritt h) durch den Empfäng und die Entspreizung von $PN^{(1)}_{Acq,m}$ und validiert in $A_n$ in Schritt k), (56) durch den Empfang und die Entspreizung von $PN^{(1)}_{Aq,m}$; Messen, durch jeden Empfänger $A_{n'}$, des Ausbreitungskanals $H^{(1)}_{BA,n,m'}$ zwischen $B_m$ und $A_{n'}$ über die Länge von $L^{(1)}$ Samples; Schätzen der Koeffizienten $H^{(1)}_{BA,m,n'}(l_1)_{l_1 = 0\,,...,L-1}$ der entsprechenden komplexen Impulsantwort (57) oder von Koeffizienten der komplexen Frequenzantwort, wobei die Koeffizienten $H^{(1)}_{BA,m,n'}(l_1)_{l_1 = 0\,,...,L-1}$ mit den von B in Schritt h) nämlich $H^{(1)}_{AB,n,m'}(l_1)_{l_1 = 0\,,...,L-1}$ geschätzten identisch sind, wenn der Ausbreitungskanal reziprok ist, und wenn die für A und B berücksichtigten Sender/Empfänger in den beiden Abfrage- und Quittierrichtungen zusammenfallen, n=n' und m=m' ist,

l) Quantifizieren, durch Benutzer A, der von seinen Messungen ausgegebenen komplexen Koeffizienten $H^{(1)}_{BA,m,n'}(l_1)_{l_1 = 0\,,...,L-1}$ zum Produzieren der digitalen Koeffizienten $Q^{(1)}_{BA,m,n'}(l_1)_{l_1 = 0\,,...,L-1}$

2. Verfahren nach Anspruch 1, **dadurch gekennzeichnet, dass** es wenigstens eine zweite Iteration der Schritte der ersten Iteration mit dem Senden von die Folge $PN^{(2)}_{int,n}$ enthaltenden Abfragesignalen $S^{(2)}_{Int,n}$ und von die Folge $PN^{(2)}_{Acq,m}$ enthaltenden Quittiersignalen $S^{(2)}_{Acq,m}$ beinhaltet, entwickelt gemäß den Messergebnissen $H^{(1)}_{AB,n,m'}(l_1)_{l_1 = 0\,,...,L-1}$ und $H^{(1)}_{BA,m,n'}(l_1)_{l_1 = 0\,,...,L-1}$ und gemäß den in Iteration A produzierten Quantifizierungsergebnissen $Q^{(1)}_{AB,n,m'}(l_1)_{l_1 = 0\,,...,L-1}$ und $Q^{(1)}_{BA,m,n'}(l_1)_{l_1 = 0\,,...,L-1}$, der Quantifizierung neuer Koeffizienten $Q^{(2)}_{AB,n,m'}(l_1)_{l_1 = 0\,,...,L-1}$ und $Q^{(2)}_{BA,m,n'}(l_1)_{l_1 = 0\,,...,L-1}$ und der einwertigen und eindeutigen Assoziation der Sender/Empfänger $A_n$ des Benutzers A und der Sender/Empfänger $B_m$ des Benutzers B durch die Beziehung zwischen den in Interation 1 quantifizierten Koeffizienten $Q^{(1)}_{AB,n,m}(l_1)_{l_1 = 0\,,...,L-1} = Q^{(1)}_{BA,m,n}(l_1)_{l_1 = 0\,,...,L-1}$, wobei die Assoziation durch den Empfang und die Entspreizung der Abfragefolgen $PN^{(2)}_{Int,n}$ und der Quittierfolgen $PN^{(2)}_{Acq,m}$ validiert wird, gesendet von $A_n$ und $B_m$ in der zweiten Iteration.

3. Verfahren nach Anspruch 2, **dadurch gekennzeichnet, dass** es bei jeder neuen Iteration k+1, wobei k größer als 1 ist, das Senden von die Folge $PN^{(k+1)}_{Int,n}$ enthaltenden Abfragesignalen $S^{(k+1)}_{Int,n}$ und von die Folge $PN^{(k+1)}_{Acq,m}$ enthaltenden Quittiersignalen $S^{(k+1)}_{Acq,m}$ beinhaltet, konstruiert gemäß den Messergebnissen der Iteration k

$$H^{(k)}_{AB,n,m\prime}(l_1)_{l_1=0\,,...,L-1}\text{ und }H^{(k)}_{BA,m,n\prime}(l_1)_{l_1=0\,,...,L-1}\,,\text{ und gemäß den Quantifizierungsergebnissen der Ite-}$$

ration k $Q^{(k)}_{AB,n,m\prime}(l_1)_{l_1=0\,,...,L-1}$ und $Q^{(k)}_{BA,m,n\prime}(l_1)_{l_1=0\,,...,L-1}$, und der einwertigen und eindeutigen Assoziation von Sendern/Empfängern $A_n$ von Benutzer A und von Sendern/Empfängern $B_m$ von Benutzer B unter Nutzung

der Beziehung $Q^{(k)}_{AB,n,m}(l_1)_{l_1=0\,,...,L-1} = Q^{(k)}_{BA,m,n}(l_1)_{l_1=0\,,...,L-1}$ zwischen in Iteration k quantifizierten Koeffizienten, wobei die Assoziation durch den Empfang und die Entspreizung von Abfrage- und Quittierungssignalen durch $B_m$ und $A_n$ validiert wird, die von $A_n$ und $B_m$ in der (k+1)-ten Iteration gesendet wurden.

4. Verfahren nach einem der vorherigen Ansprüche, **dadurch gekennzeichnet, dass** es in den Quantifizierungsschritten c) und f) bei der Einleitung, den Schritten i) und l) bei Iteration 1 und den ähnlichen Schritten in den folgenden Iterationen eine Funktion des Auswählens und des Korrekturcodierens der Kanalkoeffizienten

$$H^{(k)}_{AB,n,m}(l_1)_{l_1=0\,,...,L-1}\text{ und }H^{(k)}_{BA,m,n}(l_1)_{l_1=0\,,...,L-1}\text{ benutzt, ausgelegt zum Behalten nur der Koeffizienten,}$$

deren Schätzung am zuverlässigsten ist, durch Anwenden eines Schwellenkriteriums auf die Qualität der Schätzung der vorerwähnten Koeffizienten und einer Fehlerkorrektur auf die Quantifizierungsausgänge

$$Q^{(k)}_{AB,n,m}(l_1)_{l_1=0\,,...,L-1}\text{ und }Q^{(k)}_{BA,m,n}(l_1)_{l_1=0\,,...,L-1}\,,\text{ wobei dieses Schwellenkriterium und diese Korrektur}$$

zwischen den Benutzern A und B vordefiniert werden.

5. Verfahren nach einem der vorherigen Ansprüche, **dadurch gekennzeichnet, dass** $B_m$ in Schritt d) der Initialisierungsphase eine spezifische Konstruktionsprozedur der modifizierten Anfangsquittiersignale $S^{\prime(0)}_{Acq,m}$ nutzt, wobei diese von allen ersten Kanalmesswerten $H^{(0)}_{AB,n,m\prime}$ und entsprechenden quantifizierten Koeffizienten

$Q^{(0)}_{AB,n,m\prime}(l_1)_{l_1=0\,,...,L-1}$ abhängig gemacht werden, unter Vorsehung der Möglichkeit für die Empfänger $A_{n\prime}$ des Benutzers A, die Signale $S^{\prime(0)}_{Acq,m}$ zu rekonstruieren und zu entspreizen, wobei die modifizierten Anfangsquittiersignale wenigstens zwei Folgen PN umfassen, $PN^{(0)}_{Acq,m}$ und $PN^{\prime(0)}_{Acq,m}$ genannt, nacheinander oder gleichzeitig gesendet, wobei die erste der Folgen, $PN^{(0)}_{Acq,m}$, die $A_{n\prime}$ bekannt ist, wie in Schritt d), wobei die zweite der Folgen, $PN^{\prime(0)}_{Acq,m}$, in einem vorbestimmten Satz gewählt wird, der B und A bekannt ist, oder gemäß einer vorbestimmten Prozedur konstruiert wird, die B und A bekannt ist, gemäß den digitalen Werten $Q^{(0)}_{AB,n,m\prime}(l_1)_{l_1=0\,,...,L-1}$, die gerade von B am Ausgang von Schritt c) quantifiziert wurden; und dadurch, dass $A_{n\prime}$ auf die Initialisierungsschritte e) und f) nicht nur einen Empfang und eine Entspreizung der Folge $PN^{(0)}_{Acq,m}$, sondern auch eine Rekonstruktion

der Folge $PN^{\prime(0)}_{Acq,m}$ gemäß den Kanalschätzungen $H^{(0)}_{BA,m,n\prime}(l_1)_{l_1=0\,,...,L-1}$ und den Quantifikationen

$Q^{(0)}_{BA,m,n\prime}(l_1)_{l_1=0\,,...,L-1}$ anwendet, was dank der Entspreizung von $PN^{(0)}_{Acq,m}$ zu den Schritten e) und f) gefolgt von einer Entspreizung der Folge $PN^{\prime(0)}_{Acq,m}$ führt, zum Produzieren einer sofortigen Validierung der Gleichheit zwischen den Koeffizienten $Q^{(0)}_{AB,n,m\prime}(l_1)_{l_1=0\,,...,L-1}$ und $Q^{(0)}_{BA,m,n\prime}(l_1)_{l_1=0\,,...,L-1}$, quantifiziert in der Initialisierungsphase.

6. Verfahren nach Anspruch 3, **dadurch gekennzeichnet, dass** es bei jeder neuen Iteration k+1, wobei k gleich oder größer als 0 ist, das Senden von Quittiersignalen $S^{(k+1)}_{Acq,m}$ beinhaltet, die wenigstens zwei Folgen $PN^{(k+1)}_{Acq,m}$ und $PN^{\prime(k+1)}_{Acq,m}$ enthalten, nacheinander oder gleichzeitig ausgesendet, wobei $PN^{(k+1)}_{Acq,m}$ aus einem vorbestimmten Satz ausgewählt oder adaptiv gemäß den Quantifizierungsergebnissen $Q^{(k)}_{AB,n,m\prime}(l_1)_{l_1=0\,,...,L-1}$ in Iteration n° k konstruiert wurde und wobei $PN'^{(k+1)}_{Acq,m}$ aus einem vorbestimmten Satz ausgewählt oder adaptiv gemäß den laufenden Quantifizierungsergebnissen $Q^{(k+1)}_{AB,n,m'}(l_1)_{l_1=0\,,...,L-1}$ in der Iteration n° k+1 konstruiert wurden; andererseits **dadurch gekennzeichnet, dass** $A_{n'}$ nicht nur einen Empfang und eine Spreizung der Folge $PN^{(k)}_{Acq,m}$ anwendet, rekonstruiert gemäß seinen quantifizierten Koeffizienten $Q^{(k)}_{BA,m,n'}(l_1)_{l_1=0\,,...,L-1}$, sondern auch eine Rekonstruktion der Folge $PN'^{(k+1)}_{Acq,m}$ gemäß den Kanalschätzungen $H^{(k+1)}_{BA,m,n'}(l_1)_{l_1=0\,,...,L-1}$ und den Quantifizierungen $Q^{(k+1)}_{BA,m,n'}(l_1)_{l_1=0\,,...,L-1}$, die er dank der Entspreizung von $PN^{(k+1)}_{Acq,m}$ durchführt, gefolgt von einer Entspreizung der Folge $PN'^{(k+1)}_{Acq,m}$, zum sofortigen Validieren der Gleichheit zwischen den in Iteration k+1 quantifizierten Koeffizienten $Q^{(k+1)}_{AB,n,m'}(l_1)_{l_1=0\,,...,L-1}$ und $Q^{(k+1)}_{BA,m,n'}(l_1)_{l_1=0\,,...,L-1}$.

7. Verfahren nach einem der vorherigen Ansprüche, **dadurch gekennzeichnet, dass** die Sender von A die zufällig ausgewählten Anfangsabfragesignale in einem Satz von B bekannten Signalen nutzen, und dadurch, dass die Empfänger von B nur eines der empfangenen Anfangsabfragesignale quittieren, entweder durch die Charakteristiken der Empfänger von B vorbestimmt oder zufällig durch die Empfänger von B gewählt, nach Synchronisation, Entspreizung und Messung der Anfangsabfragesignale.

8. Verfahren nach einem der vorherigen Ansprüche, **dadurch gekennzeichnet, dass** die Sender von B die zufällig aus einem Satz von A bekannten Signalen ausgewählten Anfangsquittiersignale nutzen, dadurch, dass die Empfänger von A beim Empfang nur bestimmte der empfangenen Anfangsquittiersignale nutzen, entweder anhand der Charakteristiken der Empfänger von A vorbestimmt oder zufällig durch die Empfänger von A gewählt, nach Synchronisationsentspreizung und Messung der Anfangsquittiersignale.

9. Verfahren nach einem der vorherigen Ansprüche, **dadurch gekennzeichnet, dass** die Sender von A ein Zufallsjitter in der Zeit auf die Abfragesignale anwenden und die Sender von B ein Zufallsjitter in der Zeit auf die Quittiersignale anwenden.

10. Verfahren nach einem der vorherigen Ansprüche, **dadurch gekennzeichnet, dass** es Abfrage- und Quittiersignale $SI_A$ und $SA_B$ nutzt, gesendet gemeinsam mit Bakensignalen des einen oder anderen Benutzers A oder B, $AI_A$ und $AI_B$, das heißt auf selbstinterferierte Weise, wobei die gesendeten Abfrage- und Quittiersignale bei jeder Iteration k empfangen und verarbeitet werden dank der angepassten Parametrierungen ihrer Sendeleistungen durch A und B, $SI^{(K)}_A$ und $SA^{(K)}_B$, ihrer Empfangspegel bei B und bei A, von durch die Bake von A wie bei B empfangen und die Bake von B wie bei A empfangenen induzierten Interferenzen, $AI^{(k)}_{A->B}$ und $AI^{(k)}_{B->A}$, von Empfangspegeln in B und in A der Autointerferenzen von B und von A, $AI^{(k)}_{A->A}$ und $AI^{(1C)}_{B->B}$, von Autorückweisungsgeräten dieser Autointerferenzen beim Empfang bei A und B, $RAI_{A->A}$ und $RAI_{B->B}$, von Spreizfaktoren beim Senden bei A und B, $SF^{(k)}_{Int,n}$ und $SF^{(k)}_{Acq,m}$, gemäß den folgenden in Dezibel ausgedrückten Gleichheiten und Ungleichheiten:

- an den Empfängen von Benutzer B:

$$AI^{(k)}_{A->B} = AI^{(k)}_A - L^{(k)}_{A->B}$$

$$SI^{(k)}_{A->B} = SI^{(k)}_A - L^{(k)}_{A->B}$$

wobei $L^{(k)}_{A->B}$ die Gesamtausbreitungsverluste von A zu B repräsentieren,

$$SF^{(k)}_{Int,n} \geq 10.\log_{10}[10^{\wedge}(SI^{(k)}_{A\to B}/10)] -$$

$$10.\log_{10}[10^{\wedge}((AI_{B\to B}-RAI_{B\to B})/10) + 10^{\wedge}(AI^{(k)}_{A\to B}/10)]$$

$$+ \eta_B,$$

- an den Empfängen des Benutzers A:

$$AI^{(k)}_{B\to A} = AI^{(k)}_B - L^{(k)}_{B\to A}$$

$$SI^{(k)}_{B\to A} = SI^{(k)}_A - L^{(k)}_{B\to A}$$

wobei $L^{(k)}_{B\to A}$ die Gesamtausbreitungsverluste von B zu A repräsentieren,

$$SF^{(k)}_{Int,n} \geq 10.\log_{10}[10^{\wedge}(SI^{(k)}_{B\to A}/10)] -$$

$$10.\log_{10}[10^{\wedge}((AI_{A\to A}-RAI_{A\to A})/10) + 10^{\wedge}(AI^{(k)}_{B\to A}/10)]$$

$$+ \eta_A,$$

wobei die Margen $\eta_B$ und $\eta_A$ mit den Leistungen von Funkgeräten verbunden sind, die von den Empfängern von A und B benutzt werden.

11. Verfahren nach Anspruch 10, **dadurch gekennzeichnet, dass** es Abfrage- und Quittiersignale benutzt, die gemeinsam mit den Datenaustauschmeldungen zwischen den Benutzern, das heißt auf autoinferierte Weise gesendet werden, wobei die Abfrage- und Quittiersignale bei jeder Iteration k gesendet, empfangen und verarbeitet werden dank adaptierter Parametrierungen ihrer Sendeleistungen durch A und B, ihrer Empfangspegel bei B und A, durch die Nachrichten von A wie bei B empfangen und durch die Nachrichten von B wie bei A empfangen induzierten Interferenzen, Empfangspegeln bei B und bei A von Autointerferenzen von B und A, Autorückweisungsgeräten dieser Autointerferenzen beim Empfang bei A und B, Spreizfaktoren beim Senden bei A und B, gemäß Gleichheiten und Ungleichheiten mit Ausdrücken ähnlich wie in Anspruch 10.

12. Verfahren nach einem der vorherigen Ansprüche, **dadurch gekennzeichnet, dass** es einen zeitlichen Duplex-Kommunikationsmodus zwischen Benutzern nutzt, die eine selbe Trägerfrequenz für die Sende- und Empfangsaustausche in den beiden Übertragungsrichtungen nutzen und direkt von der Reziprozität des Ausbreitungskanals auf der einzigen für die Abfragen und Quittierungen benutzten Frequenz profitieren.

13. Verfahren nach einem der vorherigen Ansprüche, **dadurch gekennzeichnet, dass** es auf dem Satz von von den Benutzern im Duplex-Frequenzmodus benutzten Trägerfrequenzen dupliziert wird, unter Nutzung unterschiedlicher Trägerfrequenzen für ihre Sende- und Empfangsaustausche gemäß der Übertragungsrichtung, um von der Reziprozität des Ausbreitungskanals auf jeder der für die Abfragen und Quittierungen benutzten Frequenzen zu profitieren.

14. Verfahren nach einem der vorherigen Ansprüche, **dadurch gekennzeichnet, dass** die Schritte des Verfahrens für jede neue Sprach- oder Datenübertragung wiederholt werden.

15. Verfahren nach einem der vorherigen Ansprüche, **dadurch gekennzeichnet, dass** die Schritte des Verfahrens für jede neue Nachricht einer laufenden Sprach- oder Datenübertragung wiederholt werden.

16. Verfahren nach einem der vorherigen Ansprüche, **dadurch gekennzeichnet, dass** es an Funkkommunikationen angepasste Sender und Empfänger benutzt.

17. Verfahren nach einem der vorherigen Ansprüche, **dadurch gekennzeichnet, dass** die Sender/Empfänger von Benutzer A mit den Antennenelementen eines von A benutzten Netzwerks verbunden sind und die Sender/Empfänger von Benutzer B mit den Antennenelementen eines von B benutzten Netzwerks im Rahmen von Protokollen des Typs MISO, SIMO, MIMO oder "massive MIMO" verbunden sind.

18. Verfahren nach einem der vorherigen Ansprüche, **dadurch gekennzeichnet, dass** die Sender/Empfänger von Benutzer A Basisstationen oder Knoten eines Funkkommunikationsnetzes sind und die Sender/Empfänger von Benutzer B Endgeräte oder andere Knoten des Funkkommunikationsnetzes sind.

19. Verfahren nach einem der vorherigen Ansprüche, **dadurch gekennzeichnet, dass** die Sender und Empfänger an akustische Übertragungen angepasst sind.

20. Verfahren nach einem der vorherigen Ansprüche, **dadurch gekennzeichnet, dass** die Sender und Empfänger an optische Übertragungen angepasst sind.

**Claims**

1. A method for univalent and one-to-one association, prior to the establishment of a communication protocol, on the basis of the propagation channel (AU_CP) between at least one first user A and one second user B each provided with one or more transmission transmitters/receivers ($A_1...A_{NA}$), indexed using n and n' for user A, ($B_1...B_{NB}$) indexed using m and m' for user B, **characterised in that** it comprises at least the following steps:

Initialisation:

   a) (41) transmitting, by each transmitter $A_n$ of user A, initial polling signals $S^{(0)}_{Int,n}$ for the n indexed transmitter, made up of at least one random sequence $PN^{(0)}_{Int,n}$ known to user B of spreading factor $SF^{(0)}_{Int,n}$;
   b) (43) receiving and despreading, by each receiver $B_{m'}$ of user B, the random sequence $PN^{(0)}_{Int,n}$ of each of the initial polling signals $S^{(0)}_{Int,n}$ (42) measured by said receivers $B_{m'}$ of the propagation channel $H^{(0)}_{AB,n,m'}$ between $A_n$ and $B_{m'}$ over the length $L^{(0)}$ of samples; estimating coefficients $H^{(0)}_{AB,n,m'}(l_1)_{l_1=0\,,...,L-1}$ of the corresponding complex pulse response or coefficients of the corresponding complex frequency response;

   c) quantifying (44), by user B, the complex coefficients $H^{(0)}_{AB,n,m'}(l_1)_{l_1=0\,,...,L-1}$ derived from its measurements in order to produce digital values $Q^{(0)}_{AB,n,m'}(l_1)_{l_1=0\,,...,L-1}$;
   d) transmitting (45), by each transmitter $B_m$ of user B, initial acknowledgement signals $S^{(0)}_{Acq,m}$ made up of at least one random sequence, denoted $PN^{(0)}_{Acq,m}$, known to user A of spreading factor $SF^{(0)}_{Acq,m}$;
   e) receiving and despreading, by each receiver $A_{n'}$, the random sequence $PN^{(0)}_{Acq,m}$ of each of the initial acknowledgement signals $S^{(0)}_{Acq,m}$ (46) measured by said receivers $A_{n'}$ of the propagation channel $H^{(0)}_{BA,m,n'}$ between $B_m$ and $A_{n'}$ over the length $L^{(0)}$ of samples; estimating coefficients $H^{(0)}_{BA,m,n'}(l_1)_{l_1=0\,,...,L-1}$ of the corresponding complex pulse response or coefficients of the corresponding complex frequency response (47), the coefficients $H^{(0)}_{BA,m,n'}(l_1)_{l_1=0\,,...,L-1}$ being identical to those estimated by B in step c), namely $H^{(0)}_{AB,n,m'}(l_1)_{l_1=0\,,...,L-1}$ when the propagation channel is reciprocal and the transmitters/receivers considered for A and B coincide in the two polling and acknowledgement directions, with n = n' and m = m';

   f) quantifying (48), by user A, the complex coefficients $H^{(0)}_{BA,m,n'}(l_1)_{l_1=0\,,...,L-1}$ derived from its measurements in order to produce digital values $Q^{(0)}_{BA,m,n'}(l_1)_{l_1=0\,,...,L-1}$;

Iteration 1:

   g) emitting (49) by each of the transmitters $A_n$, new polling signals $S^{(1)}_{Int,n}$ made up of at least one new

random sequence $PN^{(1)}_{Int,n}$ of spreading factor $SF^{(1)}_{Int,n}$ selected from a predetermined set known to A and B or constructed according to a predetermined process known to A and B according to the digital values $Q^{(0)}_{BA,m,n'}(l_1)_{l_1=0,...,L-1}$ determined by A on completion of step f);

h) receiving and despreading the sequence $PN^{(1)}_{Int,n}$ of the signal $S^{(1)}_{Int,n}$ by each receiver $B_{m'}$(50), $B_{m'}$ that previously reconstructs the random sequence $PN^{(1)}_{Int,n}$ selected or constructed by $A_n$, according to the same process as $A_n$, by using the digital values $Q^{(0)}_{AB,n,m'}(l_1)_{l_1=0,...,L-1}$ determined by B during the quantification performed in step c) of the coefficients $H^{(0)}_{AB,n,m'}(l_1)_{l_1=0,...,L-1}$, which digital values are equal to those produced by A in step f) when the propagation channel is reciprocal, when n = n' and when m = m'; B validating, when m = m' and n = n', by virtue of the despreading of $PN^{(1)}_{Int,n}$ on reception by $B_m$, the equality between coefficients $Q^{(0)}_{AB,n,m}(l_1)_{l_1=0,...,L-1} = Q^{(0)}_{BA,m,n}(l_1)_{l_1=0,...,L-1}$ quantified during the initialisation phase (51),; updated measuring, by each receiver $B_{m'}$, of the propagation channel $H^{(1)}_{AB,n,m'}$, between $A_n$ and $B_{m'}$ over the length $L^{(1)}$ of samples, estimating coefficients $H^{(1)}_{AB,n,m'}(l_1)_{l_1=0,...,L-1}$ of the corresponding complex pulse response or of the corresponding complex frequency response (52);

i) quantifying (53), by B, the coefficients $H^{(1)}_{AB,n,m'}(l_1)_{l_1=0,...,L-1}$ derived from its measurements in order to produce digital values $Q^{(1)}_{AB,n,m'}(l_1)_{l_1=0,...,L-1}$;

j) transmitting (54), by each transmitter $B_m$, new acknowledgement signals, denoted $S^{(1)}_{Acq,m}$, made up of at least one random sequence, denoted $PN^{(1)}_{Acq,m}$, of spreading factor $SF^{(1)}_{Acq,m}$, selected from a predetermined set known to A and B or constructed according to a predetermined process known to A and B according to the digital values $Q^{(0)}_{AB,n,m'}(l_1)_{l_1=0,...,L-1}$ determined by B on completion of step c);

k) receiving and despreading, by each receiver $A_{n'}$, random sequences $PN^{(1)}_{Acq,m}$ of each of the acknowledgement signals $S^{(1)}_{Acq,m}$ (55), $A_{n'}$ that previously reconstitutes the sequence $PN^{(1)}_{Acq,m}$ selected or constructed by $B_m$, according to the same process as $B_m$, by using the digital values $Q^{(O)}_{BA,m,n'}(l_1)_{l_1=0,...,L-1}$ that A determined in step f), which digital values are equal to those produced by B in step c), namely $Q^{(O)}_{AB,n,m'}(l_1)_{l_1=0,...,L-1}$ when the propagation channel is reciprocal, when n = n' and when m = m'; validating, still when m = m' and n = n', by A, by virtue of the despreading of $PN^{(1)}_{Acq,m}$, the equality between coefficients $Q^{(0)}_{BA,m,n}(l_1)_{l_1=0,...,L-1} = Q^{(0)}_{AB,n,m}(l_1)_{l_1=0,...,L-1}$ quantified during the initialisation phase (56); the univalent association of the transmitters/receivers $A_n$ of user A and of the transmitters/receivers $B_m$ of user B then becomes effective by virtue of the equality relations between quantified coefficients $Q^{(0)}_{AB,n,m}(l_1)_{l_1=0,...,L-1} = Q^{(0)}_{BA,m,n}(l_1)_{l_1=0,...,L-1}$ validated in $B_m$ in step h) by receiving and despreading $PN^{(1)}_{Int,n}$ and validated in $A_n$ in step k) (56) by receiving and despreading $PN^{(1)}_{Acq,m}$; measuring, by each receiver $A_{n'}$, the propagation channel $H^{(1)}_{BA,m,n'}$ between $B_m$ and $A_{n'}$ over the length $L^{(1)}$ of samples; estimating coefficients $H^{(1)}_{BA,m,n'}(l_1)_{l_1=0,...,L-1}$ of the corresponding complex pulse response (57) or coefficients of the complex frequency response, the coefficients $H^{(1)}_{BA,m,n'}(l_1)_{l_1=0,...,L-1}$ being identical to those estimated by user B in step h), namely $H^{(1)}_{AB,n,m'}(l_1)_{l_1=0,...,L-1}$ when the propagation channel is reciprocal and the transmitters/receivers considered for A and B coincide in the two polling and acknowledgement directions, n = n' and m = m';

1) quantifying, by user A, the complex coefficients $H^{(1)}_{BA,m,n'}(l_1)_{l_1=0,\ldots,L-1}$ derived from its measurements in order to produce digital coefficients $Q^{(1)}_{BA,m,n'}(l_1)_{l_1=0,\ldots,L-1}$ (58).

2. The method as claimed in claim 1, **characterised in that** it comprises at least one second iteration of the steps of the first iteration with the transmission of polling signals $S^{(2)}_{Int,n}$ containing the sequence $PN^{(2)}_{Int,n}$ and of acknowledgement signals $S^{(2)}_{Acq,m}$ containing the sequence $PN^{(2)}_{Acq,m}$, established according to the measurement results

$H^{(1)}_{AB,n,m'}(l_1)_{l_1=0,\ldots,L-1}$ and $H^{(1)}_{BA,m,n'}(l_1)_{l_1=0,\ldots,L-1}$ and according to the quantification results

$Q^{(1)}_{AB,n,m'}(l_1)_{l_1=0,\ldots,L-1}$ and $Q^{(1)}_{BA,m,n'}(l_1)_{l_1=0,\ldots,L-1}$ produced in iteration 1, the quantification of new coefficients $Q^{(2)}_{AB,n,m'}(l_1)_{l_1=0,\ldots,L-1}$ and $Q^{(2)}_{BA,m,n'}(l_1)_{l_1=0,\ldots,L-1}$, and the univalent and univocal association of the transmitters/receivers $A_n$ of user A and of the transmitters/receivers $B_m$ of user B by the relation between coefficients quantified during iteration 1 $Q^{(1)}_{AB,n,m}(l_1)_{l_1=0,\ldots,L-1} = Q^{(1)}_{BA,m,n}(l_1)_{l_1=0,\ldots,L-1}$, which association is validated by the reception and the despreading of the polling $PN^{(2)}_{Int,n}$ and acknowledgement $PN^{(2)}_{Acq,m}$ sequences, transmitted by $A_n$ and $B_m$ during the second iteration.

3. The method as claimed in claim 2, **characterised in that** it comprises, upon each new iteration k+1, with k being greater than 1, transmitting polling signals $S^{(k+1)}_{Int,n}$ containing the sequence $PN^{(k+1)}_{Int,n}$ and acknowledgement signals $S^{(k+1)}_{Acq,m}$ containing the sequence $PN^{(k+1)}_{Acq,m}$ constructed according to the measurement results of iteration k $H^{(k)}_{AB,n,m'}(l_1)_{l_1=0,\ldots,L-1}$ and $H^{(k)}_{BA,m,n'}(l_1)_{l_1=0,\ldots,L-1}$ and according to the quantification results of iteration k and $Q^{(k)}_{BA,m,n'}(l_1)_{l_1=0,\ldots,L-1}$, and the univalent and univocal association of the transmitters/receivers $A_n$ of user A and of the transmitters/receivers $B_m$ of user B using the relation $Q^{(k)}_{AB,n,m}(l_1)_{l_1=0,\ldots,L-1} = Q^{(k)}_{BA,m,n}(l_1)_{l_1=0,\ldots,L-1}$ between coefficients quantified during iteration k, which association is validated by the reception and the despreading by $B_m$ and $A_n$ of the polling and acknowledgement signals transmitted by $A_n$ and $B_m$ during the (k+1)th iteration.

4. The method as claimed in any one of the preceding claims, **characterised in that** it uses, in quantification steps c) and f) during the initiation, and in steps i) and l) during iteration 1, and in similar steps during subsequent iterations, a function for selecting and correction coding channel coefficients $H^{(k)}_{AB,n,m}(l_1)_{l_1=0,\ldots,L-1}$ and $H^{(k)}_{BA,m,n}(l_1)_{l_1=0,\ldots,L-1}$ adapted to only use coefficients with the most reliable estimation, by applying a thresholding criterion to the quality of the estimation of the aforementioned coefficients and an error correction to the quantification outputs $Q^{(k)}_{AB,n,m}(l_1)_{l_1=0,\ldots,L-1}$ and $Q^{(k)}_{BA,m,n}(l_1)_{l_1=0,\ldots,L-1}$, said thresholding criterion and said correction being predefined between the users A and B.

5. The method as claimed in any one of the preceding claims, **characterised in that** $B_m$ uses, in step d) of the initialisation phase, a process for the specific construction of the modified initial acknowledgement signals $S'^{(0)}_{Acq,m}$, making said signals dependent on the very first channel measurements $H^{(0)}_{AB,n,m'}$ and on the corresponding quantified coefficients $Q^{(0)}_{AB,n,m'}(l_1)_{l_1=0,\ldots,L-1}$, whilst providing the possibility for the receivers $A_{n'}$ of user A to reconstruct and despread the signals S'$^{(0)}$$_{Acq,m}$, said modified initial acknowledgement signals comprising at least two sequences PN, denoted PN$^{(0)}$$_{Acq,m}$ and PN'$^{(0)}$$_{Acq,m}$, that are successively or simultaneously transmitted, the first one of the sequences, PN$^{(0)}$$_{Acq,m}$, being known to A$_{n'}$, as in step d), the second one of the sequences, PN'$^{(0)}$$_{Acq,m}$, being selected from a predetermined set known to B and to A or constructed according to a predetermined process known to B and to A according to the digital values $Q^{(0)}_{AB,n,m'}(l_1)_{l_1 = 0,...,L-1}$ that have just been quantified by B on completion of step c); and **in that** A$_{n'}$ applies, in steps e) and f) of the initialisation, not only the reception and despreading of the sequence PN$^{(0)}$$_{Acq,m}$, but also a reconstruction of the sequence PN'$^{(0)}$$_{Acq,m}$ according to the channel estimations $H^{(0)}_{BA,m,n'}(l_1)_{l_1 = 0,...,L-1}$ and the quantifications $Q^{(0)}_{BA,m,n'}(l_1)_{l_1 = 0,...,L-1}$ that it conducts by virtue of the despreading of PN$^{(0)}$$_{Acq,m}$ in steps e) and f), followed by the despreading of the sequence PN'$^{(0)}$$_{Acq,m}$ in order to produce an immediate validation of the equality between the coefficients $Q^{(0)}_{AB,n,m'}(l_1)_{l_1 = 0,...,L-1}$ and $Q^{(0)}_{BA,m,n'}(l_1)_{l_1 = 0,...,L-1}$ quantified in the initialisation phase.

6. The method as claimed in claim 3, **characterised in that** it comprises, upon each new iteration k+1, with k being greater than or equal to 0, transmitting acknowledgement signals S$^{(k+1)}$$_{Acq,m}$ containing at least two sequences PN$^{(k+1)}$$_{Acq,m}$ and PN'$^{(k+1)}$$_{Acq,m}$ that are sequentially or simultaneously transmitted, with PN$^{(k+1)}$$_{Acq,m}$ being selected from a set that is predetermined or adaptively constructed according to the quantification results $Q^{(k)}_{AB,n,m'}(l_1)_{l_1 = 0,...,L-1}$ in iteration n°k, and with PN'$^{(k+1)}$$_{Acq,m}$ being selected from a set that is predetermined or adaptively constructed according to the current quantification results $Q^{(k+1)}_{AB,n,m'}(l_1)_{l_1 = 0,...,L-1}$ in iteration n°k+1, further **characterised in that** A$_{n'}$ applies not only the reception and despreading of the sequence PN$^{(k)}$$_{Acq,m}$ reconstructed according to its quantified coefficients $Q^{(k)}_{BA,m,n'}(l_1)_{l_1 = 0,...,L-1}$, but also a reconstruction of the sequence PN'$^{(k+1)}$$_{Acq,m}$ according to the channel estimations $H^{(k+1)}_{BA,m,n'}(l_1)_{l_1 = 0,...,L-1}$ and the quantifications $Q^{(k+1)}_{BA,m,n'}(l_1)_{l_1 = 0,...,L-1}$ that it conducts by virtue of the despreading of PN$^{(k+1)}$$_{Acq,m}$, followed by despreading of the sequence PN'$^{(k+1)}$$_{Acq,m}$ in order to immediately validate the equality between the coefficients $Q^{(k+1)}_{AB,n,m'}(l_1)_{l_1 = 0,...,L-1}$ and $Q^{(k+1)}_{BA,m,n'}(l_1)_{l_1 = 0,...,L-1}$ quantified in iteration k+1.

7. The method as claimed in any one of the preceding claims, **characterised in that** the transmitters of A use initial polling signals randomly selected from a set of signals known to B, and **in that** the receivers of B only acknowledge one of the received initial polling signals, either predetermined by the features of the receivers of B or randomly selected by the receivers of B, following synchronisation, despreading and measuring of said initial polling signals.

8. The method as claimed in any one of the preceding claims, **characterised in that** the transmitters of B use initial acknowledgement signals randomly selected from a set of signals known to A, **in that** the receivers of A on reception only process some of the received initial acknowledgement signals, either predetermined by the features of the receivers of A or randomly selected by the receivers of A, following synchronisation, despreading and measuring of said initial acknowledgement signals.

9. The method as claimed in any one of the preceding claims, **characterised in that** the transmitters of A apply timely random jitter to the polling signals and the transmitters of B apply timely random jitter to the acknowledgement signals.

10. The method as claimed in any one of the preceding claims, **characterised in that** it uses polling and acknowledgement signals SI$_A$ and SA$_B$, jointly transmitted to beacon signals of either user A or user B, AI$_A$ and AI$_B$, i.e. in a self-interfered manner, said polling and acknowledgement signals being transmitted/received and processed upon each iteration k by virtue of adapted parameterisations of their transmission powers by A and B, SI$^{(k)}$$_A$ and SA$^{(k)}$$_B$, of their reception levels at A and B, of interference induced by the beacon of A received by B and by the beacon of B received by A, $AI^{(K)}_{A->B}$ and $AI^{(K)}_{B->A}$, of the reception levels of B and of A of the self-interference derived from B and A, $AI^{(k)}_{A->A}$ and $AI^{(k)}_{B->B}$, of devices for self-rejecting this self-interference upon reception by A and by B, $RAI_{A->A}$ and $RAI_{B->B}$, spreading factors upon transmission by A and by B, $SF^{(K)}_{Int,n}$ and $SF^{(K)}_{Acq,m}$, according to the following equalities and inequalities expressed in decibel:

- at the receptions of user B:

$$AI^{(k)}_{A->B} = AI^{(k)}_A - L^{(k)}_{A->B}$$

$$SI^{(k)}_{A->B} = SI^{(k)}_A - L^{(k)}_{A->B} ,$$

where $L^{(k)}_{A->B}$ represents the total propagation losses from A to B,

$$SF^{(k)}_{Int,n} \geq 10.\log_{10}[10^\wedge(SI^{(k)}_{A->B}/10)] -$$
$$10.\log_{10}[10^\wedge((AI_{B->B}-RAI_{B->B})/10) + 10^\wedge(AI^{(k)}_{A->B}/10)]$$
$$+ \eta_B,$$

- at the receptions of user A:

$$AI^{(k)}_{B->A} = AI^{(k)}_B - L^{(k)}_{B->A}$$

$$SI^{(k)}_{B->A} = SI^{(k)}_A - L^{(k)}_{B->A} ,$$

where $L^{(k)}_{B->A}$ represents the total propagation losses from B to A,

$$SF^{(k)}_{Int,n} \geq 10.\log_{10}[10^\wedge(SI^{(k)}_{B->A}/10)] -$$
$$10.\log_{10}[10^\wedge((AI_{A->A}-RAI_{A->A})/10) + 10^\wedge(AI^{(k)}_{B->A}/10)]$$
$$+ \eta_A,$$

with the margins $\eta_B$ and $\eta_A$ being linked to the performance levels of the radio equipment used by the receivers of A and of B.

11. The method as claimed in claim 10, **characterised in that** it uses polling and acknowledgement signals jointly transmitted to the data exchange messages between the users, i.e. in a self-interfered manner, said polling and acknowledgement signals being transmitted, received and processed upon each iteration k by virtue of adapted parameterisations of their transmission powers by A and by B, of their reception levels by B and by A, of interference induced by the messages of A received by B and by the messages of B received by A, of the reception levels by B and by A of the self-interference derived from B and from A, of devices for self-rejecting said self-interference upon reception by A and by B, of spreading factors upon transmission by A and by B, according to equalities and inequalities with expressions similar to claim 10.

12. The method as claimed in any one of the preceding claims, **characterised in that** it uses a temporal Duplex communication mode between users using the same carrier frequency for the transmission and reception exchanges in both transmission directions and benefits directly from the reciprocity of the propagation channel on the single frequency used for the polling and acknowledgements.

**13.** The method as claimed in any one of the preceding claims, **characterised in that** it is duplicated over all the carrier frequencies used by users in Duplex frequency mode using different carrier frequencies for their transmission and reception exchanges according to the transmission direction, in order to benefit from the reciprocity of the propagation channel over each of the frequencies used for the polling and acknowledgements.

**14.** The method as claimed in any one of the preceding claims, **characterised in that** the steps of the method are repeated for each new telephony or data transmission.

**15.** The method as claimed in any one of the preceding claims, **characterised in that** the steps of the method are repeated for each new message of an ongoing telephony or data transmission.

**16.** The method as claimed in any one of the preceding claims, **characterised in that** it uses transmitters and receivers adapted to radiocommunications.

**17.** The method as claimed in any one of the preceding claims, **characterised in that** the transmitters/receivers of user A are connected to the antenna elements of a network used by A and the transmitters/receivers of user B are connected to the antenna elements of a network used by B within the context of protocols of the MISO, SIMO, MIMO or "massive MIMO" type.

**18.** The method as claimed in any one of the preceding claims, **characterised in that** the transmitters/receivers of user A are base stations or nodes of a radiocommunication network and the transmitters/receivers of user B are terminals or other nodes of said radiocommunication network.

**19.** The method as claimed in any one of the preceding claims, **characterised in that** the transmitters and receivers are adapted to acoustic transmissions.

**20.** The method as claimed in any one of the preceding claims, **characterised in that** the transmitters and receivers are adapted to optical transmissions.

FIG.1

FIG.2

EP 3 398 307 B1

| A : émetteurs indice n, récepteurs indice n' | A : émetteurs indice m, récepteurs indice m' |
|---|---|
| **Emetteur $A_n$**<br><br>Emet $S^{(0)}_{Int,n}$ $\longrightarrow$<br>contenant au moins une séquence étalée<br><br>spectralement $PN^{(0)}_{Int,\,n}$       étape a) **41** | **Récepteur $B_{m'}$**<br><br>Reçoit $S^{(0)}_{Int,n}$ et désétale $PN^{(0)}_{Int,n}$ filtrés par $H^{(0)}_{AB,n,m'}$<br>entre $A_n$ et $B_{m'}$       étape b) **42**<br><br>Estime $H^{(0)}_{AB,n,m'}(l_1)_{l_1=0,...,L-1}$       étape b) **43**<br><br>Quantifie $Q^{(0)}_{AB,n,m'}(l_1)_{l_1=0,...,L-1}$       étape c) **44** |
| **Récepteur $A_{n'}$**<br><br>Reçoit $S^{(0)}_{Acq,m}$ et désétale $PN^{(0)}_{Acq,m}$<br>filtrés par $H^{(0)}_{BA,m,n'}$ entre $B_m$ et $A_{n'}$       étape e) **46**<br><br>Estime $H^{(0)}_{BA,n,m'}(l_1)_{l_1=0,...,L-1}$       étape e) **47**<br>entre $B_m$ et $A_{n'}$<br><br>Quantifie $Q^{(0)}_{BA,m,n'}(l_1)_{l_1=0,...,L-1}$       étape f) **48** | **Emetteur $B_m$**<br><br>Emet $S^{(0)}_{Acq,m}$ contenant au moins une séquence étalée<br>spectralement $PN^{(0)}_{Acq,m}$       étape d) **45** |

INIT

FIG.3

**ITERATION N° 1**

**Emetteur $A_n$**

Construit et émet $S^{(1)}_{Int,n}$ contenant une séquence étalée spectralement $PN^{(1)}_{Int,\,n}$ d'après les valeurs $Q^{(0)}_{BA,m,n'}(l_1)_{l_1=0,\ldots,L-1}$ **étape g) 49**

**Récepteur $B_{m'}$**

Reconstruit $PN^{(1)}_{Int,n}$ d'après $Q^{(0)}_{AB,n,m'}(l_1)_{l_1=0,\ldots,L-1}$

Reçoit $S^{(1)}_{Int,n}$ et désétale $PN^{(1)}_{Int,n}$ filtrés par $H^{(1)}_{AB,n,m'}$ entre $A_n$ et $B_{m'}$ **étape h) 50**

Lorsque m=m' et n=n', réalise au niveau de $B_m$ l'association de $A_n$ avec $B_m$ en validant par le désétalement de $PN^{(1)}_{Int,n}$ l'égalité entre coefficients quantifiés lors de la phase d'init **étape h) 51**

$Q^{(0)}_{AB,n,m}(l_1)_{l_1=0,\ldots,L-1} = Q^{(0)}_{BA,m,n}(l_1)_{l_1=0,\ldots,L-1}$

Estime $H^{(1)}_{AB,n,m'}(l_1)_{l_1=0,\ldots,L-1}$ **étape h) 52**

Quantifie $Q^{(1)}_{AB,n,m'}(l_1)_{l_1=0,\ldots,L-1}$ **étape i) 53**

**Récepteur $A_{n'}$**

Reconstruit $PN^{(1)}_{Acq,m}$ d'après $Q^{(0)}_{BA,m,n'}(l_1)_{l_1=0,\ldots,L-1}$

Reçoit $S^{(1)}_{Acq,m}$ et désétale $PN^{(1)}_{Acq,m}$ filtrés par $H^{(1)}_{BA,m,n'}$ entre $B_m$ et $A_{n'}$ **étape k) 55**

Lorsque m=m' et n=n', réalise au niveau de $A_n$ l'association de $B_m$ avec $A_n$ en validant par le désétalement de $PN^{(1)}_{Int,n}$ l'égalité entre coefficients quantifiés lors de la phase d'init **étape k) 56**

$Q^{(0)}_{AB,n,m}(l_1)_{l_1=0,\ldots,L-1} = Q^{(0)}_{BA,m,n}(l_1)_{l_1=0,\ldots,L-1}$

Estime $H^{(1)}_{BA,m,n'}(l_1)_{l_1=0,\ldots,L-1}$ entre $B_m$ et $A_{n'}$ **étape k) 57**

Quantifie $Q^{(1)}_{BA,m,n'}(l_1)_{l_1=0,\ldots,L-1}$ **étape l) 58**

**Emetteur $B_m$**

Construit et émet $S^{(1)}_{Acq,m}$ contenant $PN^{(1)}_{Acq,m}$ d'après $Q^{(0)}_{AB,n,m'}(l_1)_{l_1=0,\ldots,L-1}$ **étape j) 54**

...    ...

**FIG.3 (suite)**

| I T E R A T I O N  N°  k + 1 | Emetteur $A_n$ | Récepteur $B_{m'}$ |
|---|---|---|
| | Construit et émet $S^{(k+1)}_{Int,n}$ contenant au moins une séquence $PN^{(k+1)}_{Int,n}$ d'après $Q^{(k)}_{BA,m,n'}(l_1)_{l_1=0,\ldots,L-1}$ | Reconstruit $PN^{(k+1)}_{Int,n}$ d'après $Q^{(k)}_{AB,n,m'}(l_1)_{l_1=0,\ldots,L-1}$ <br> Reçoit $S^{(k+1)}_{Int,n}$ et désétale $PN^{(k+1)}_{Int,n}$ <br> Lorsque m=m' et n=n', réalise l'association entre $A_n$ et $B_m$ auprès de $B_m$ en validant par désétalement la relation $Q^{(k)}_{AB,n,m}(l_1)_{l_1=0,\ldots,L-1} = Q^{(k)}_{BA,m,n}(l_1)_{l_1=0,\ldots,L-1}$ <br> Estime $H^{(k+1)}_{AB,n,m'}(l_1)_{l_1=0,\ldots,L-1}$ <br> Quantifie $Q^{(k+1)}_{AB,n,m'}(l_1)_{l_1=0,\ldots,L-1}$ |
| | **Récepteur $A_{n'}$** <br> Reconstruit $PN^{(k)}_{Acq,m}$ d'après $Q^{(k)}_{BA,m,n'}(l_1)_{l_1=0,\ldots,L-1}$ <br> Reçoit $S^{(k+1)}_{Acq,m}$ et désétale $PN^{(k+1)}_{Acq,m}$ <br> Lorsque m=m' et n=n', réalise l'association entre $B_m$ et $A_n$ auprès de $A_n$ en validant par désétalement la relation $Q^{(k)}_{AB,n,m}(l_1)_{l_1=0,\ldots,L-1} = Q^{(k)}_{BA,m,n}(l_1)_{l_1=0,\ldots,L-1}$ <br> Estime $H^{(k+1)}_{BA,m,n'}(l_1)_{l_1=0,\ldots,L-1}$ <br> Quantifie $Q^{(k+1)}_{BA,m,n'}(l_1)_{l_1=0,\ldots,L-1}$ | **Emetteur $B_m$** <br> Construit et émet $S^{(k+1)}_{Acq,m}$ contenant au moins une séquence $PN^{(k+1)}_{Acq,m}$ d'après $Q^{(k)}_{AB,n,m'}(l_1)_{l_1=0,\ldots,L-1}$ |

FIG.3 (fin)